# EUROPEAN PATENT SPECIFICATION

(11) **EP 4 030 864 B1**
(45) Date of publication and mention of the grant of the patent: **31.07.2024**
(21) Application number: 20880258.7
(22) Date of filing: 07.08.2020
(51) Int. Cl.: H04W 76/22, H04W 76/11, H04W 76/16

(54) **BINDING OF MULTIPLE SESSIONS**
BINDUNG VON MEHREREN SITZUNGEN
LIAISON DE PLUSIEURS SESSIONS

(30) Priority: 25.10.2019 CN 201911024803
(43) Date of publication of application: 20.07.2022
(73) Proprietor: Huawei Technologies Co., Ltd., Shenzhen, Guangdong 518129 (CN)
(72) Inventor: YU, Youyang, Shenzhen, Guangdong 518129 (CN); SHI, Shufeng, Shenzhen, Guangdong 518129 (CN)
(74) Representative: Pfenning, Meinig & Partner mbB
(86) International application number: PCT/CN2020/107693
(87) International publication number: WO 2021/077853

(56) References cited:
- WO-A1-2019/173951
- CN-A- 110 035 040
- US-A1- 2018 262 924
- "3rd Generation Partnership Project; Technical Specification Group Services and System Aspects; Study on access traffic steering, switch and splitting support in the 5G system architecture (Release 16)", 3GPP STANDARD; TECHNICAL REPORT; 3GPP TR 23.793, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V16.0.0, 19 December 2018 (2018-12-19), pages 1 - 114, XP051591224
- "3rd Generation Partnership Project; Technical Specification Group Services and System Aspects; Procedures for the 5G System; Stage 2 (Release 16)", 24 September 2019 (2019-09-24), XP051839501, Retrieved from the Internet <URL:https://ftp.3gpp.org/tsg_sa/WG2_Arch/Latest_SA2_Specs/DRAFT_INTERIM/Archive/23502-g20_23502_CR1505R1_Replaced_CR1659_23502_CR1658r1_Postponed_CR1234_Corrected_CRs_Implemented.zip 23502-g20_23502_CR1505R1_Replaced_CR1659_23502_CR1658r1_Postponed_CR1234_Corrected_CRs_Implemented.doc> [retrieved on 20190924]
- "3rd Generation Partnership Project; Technical Specification Group Services and System Aspects; Study on Access Traffic Steering, Switching and Splitting support in the 5G system architecture (Release 16)", 3GPP STANDARD; TECHNICAL REPORT; 3GPP TR 23.793, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V1.2.0, 6 December 2018 (2018-12-06), Mobile Competence Centre ; 650, route des Lucioles ; F-06921 Sophia-Antipolis Cedex ; France, pages 1 - 115, XP051591069

## Description

### TECHNICAL FIELD

This application relates to communication technologies, and in particular, to a data transmission method, a computer readable storage and an apparatus.

### BACKGROUND

In a next-generation wireless communication system, for example, in a new radio (new radio, NR) system, user equipment (user equipment, UE) establishes a packet data unit (packet data unit, PDU) session with a data network (data network, DN) network element by using a user plane function (user plane function, UPF) network element, and the PDU session provides a PDU connection service between a terminal device and the DN network element.

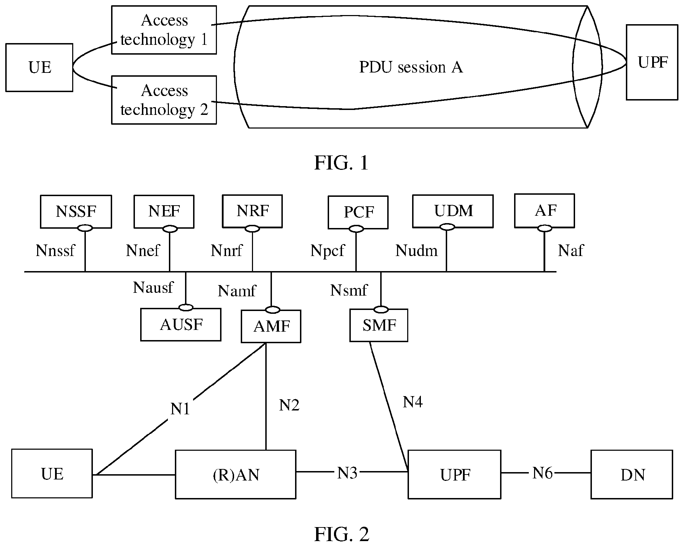

In a current technology, establishment of a multi-access PDU session (which may also be referred to as a multi-PDU session) between UE and a UPF network element may be supported. For example, as shown in FIG. 1, a multi-access PDU session A is allowed to be established between UE and a UPF network element based on an access technology 1 and an access technology 2. In this case, a service flow of the UE may be transmitted to the UPF network element by using the access technology 1 and/or the access technology 2. The multi-access PDU session is relative to a single-access PDU session. The single-access PDU session is a PDU session that accesses the UPF network element by using one access technology, and the multi-access PDU session is a PDU session that accesses the UPF network element by using a plurality of access technologies (at least two access technologies).

However, in the current technology, the multi-PDU session can be implemented only after the multi-PDU session is established between the UE and the UPF network element. In the current technology, a manner of implementing the multi-PDU session is very complex.

"3rd Generation Partnership Project; Technical Specification Group Services and System Aspects; Study on access traffic steering, switch and splitting support in the 5G system architecture (Release 16)", 3GPP Standards, Technical report; 3GPP TR 23.793, 3GPP, Mobile Competence Center, 650, Route des Lucioles; F-06921 Sophia-Antipolis CEDEX, France, vol.SA WG2, no. V16.0.0. 2018-12-19, pages 1 - 114, XP051591224, discloses that SMF establishes a child PDU session over non-3GPP access and establishes a child PDU session over 3GPP access, It is FFS how the UE is informed that the network has established a multi-access PDU session instead of the single-access PDU session requested by the UE. The flow above assumes that the UE is informed by receiving the same PDU session id when the user plane is established on both accesses.

### SUMMARY

The present invention is set out in the appended set of claims. Embodiments of this application provide a data transmission method and an apparatus, to establish binding between a plurality of PDU sessions, and a multi-access PDU session function is implemented by using the plurality of bound PDU sessions. Therefore, when a multi-PDU session is implemented, the multi-access PDU session may not be re-established, and a manner of implementing the multi-PDU session is simpler.

A claimed first aspect of embodiments of this application provides a data transmission method, including: A terminal device receives first information sent by a session management function SMF network element, where the first information indicates to bind a first packet data unit PDU session and a second PDU session; and the terminal device transmits data based on the bound first PDU session and the bound second PDU session. In this way, a multi-access PDU session function is implemented by using a plurality of bound PDUs. When a plurality of PDU sessions are single-access PDU sessions, the multi-access PDU session function may be implemented by using a plurality of bound single-access PDUs. Therefore, when a multi-access PDU session is implemented, the multi-access PDU session may not be re-established, and a manner of implementing the multi-access PDU session is simpler. When a plurality of PDU sessions include a multi-access PDU session, a more flexible multi-PDU session can be implemented.

In a possible design, the first information includes at least one of an identifier of the first PDU session and an identifier of the second PDU session. In this way, the terminal device may determine the first PDU session and the second PDU session based on at least one of the identifier of the first PDU session and the identifier of the second PDU session.

In a possible design, the first information further includes at least one of a first address of the first PDU session and type information of the first address, and/or at least one of a second address of the second PDU session and type information of the second address. The first address is an IP address corresponding to the first PDU session, and the second address is an IP address corresponding to the second PDU session. In this way, the terminal device may obtain, from the first information, an IP status corresponding to the first PDU session and/or an IP status corresponding to the second PDU session.

In a possible design, the first information further includes indication information, indicating to bind the first PDU session and the second PDU session.

In the claimed invention, the method further includes: The terminal device sends a first request message to the SMF network element, where the first request message includes an identifier of the first PDU session and information about the second PDU session, and the information about the second PDU session includes at least one of an identifier of the second PDU session, the second address of the second PDU session, and the type information of the second address.

That a terminal device receives first information sent by a session management function SMF network element in the claimed invention includes:
The terminal device receives a response message that is sent by the SMF network element and that is of the first request message, where the response message of the first request message includes the first information.

In a possible design, the method further includes: The terminal device determines the information about the second PDU session according to a multi-PDU session policy, where the multi-PDU session policy indicates that a PDU session corresponding to the multi-PDU session policy has a binding capability. In this way, the terminal device may first determine the information about the second PDU session that can be bound to the first PDU session. Therefore, when the terminal device sends the first request message to the SMF network element, there is a high probability that the first PDU session and the second PDU session can be bound. In comparison with an implementation in which the terminal device randomly selects information about the two PDU sessions and sends the information to the SMF network element, efficiency and a success rate of binding the first PDU session and the second PDU session in this embodiment of this application are higher.

In a possible design, the method further includes: The terminal device sends a second request message to the SMF network element, where the second request message includes first indication information, and the first indication information indicates that the terminal device supports a multi-PDU session distribution capability. That a terminal device receives first information sent by a session management function SMF network element includes: The terminal device receives a response message that is sent by the SMF network element and that is of the second request message, where the response message of the second request message includes the first information. In this way, the SMF network element may determine two PDU sessions that can be bound, thereby reducing occupation of a computing resource of the terminal device.

In a possible design, that the terminal device transmits data based on the bound first PDU session and the bound second PDU session includes: The terminal device sends a data packet of a first service flow by using the first PDU session and/or the second PDU session, where a source address of the data packet of the first service flow includes the first address of the first PDU session and/or the second address of the second PDU session; and/or
the terminal device receives a data packet of a second service flow by using the first PDU session and/or the second PDU session, where a destination address of the data packet of the second service flow includes the first address of the first PDU session and/or the second address of the second PDU session.

In a possible design, the method further includes: The terminal device receives the multi-PDU session policy sent by a policy control function PCF network element or locally configured.

In a possible design, the multi-PDU session policy is second indication information, and that the terminal device receives the multi-PDU session policy sent by a PCF network element includes: The terminal device receives a first policy sent by the PCF network element, where the first policy includes the second indication information, and the second indication information indicates that a binding relationship is allowed to be established between PDU sessions established according to the first policy.

In a possible design, that the terminal device receives the multi-PDU session policy sent by a policy control function PCF network element includes: The terminal device receives a plurality of first policies sent by the PCF network element, where each first policy includes multi-PDU indication information, and a binding relationship is allowed to be established between PDU sessions that are established according to first policies including the same multi-PDU indication information.

In a possible design, the multi-PDU session policy includes a binding parameter, and the multi-PDU session policy indicates that a binding relationship is allowed to be established between PDU sessions including the same binding parameter.

In a possible design, the binding parameter includes at least one of the following information: a data network name DNN, slice selection information, application identification information, flow description information, a service and session continuity SSC mode, and a PDU session type.

In a possible design, the terminal device sends a binding release request to the SMF network element, where the binding release request is used to request to release the binding between the first PDU session and the second PDU session.

A non claimed second aspect of embodiments of this application provides a data transmission method, including: A session management function SMF network element determines that a first PDU session and a second PDU session can be bound; and the SMF network element sends first information to a terminal device, where the first information indicates to bind the first PDU session and the second PDU session.

In a possible design, the method further includes: The SMF network element sends a session message to a user plane function UPF network element, where the session message includes at least one of the following: a first N4 session identifier, a second N4 session identifier, information indicating to bind the first PDU session and the second PDU session, a first address of the first PDU session, and a second address of the second PDU session. The first address is an IP address corresponding to the first PDU session, and the second address is an IP address corresponding to the second PDU session.

In a possible design, that an SMF network element determines that a first PDU session and a second PDU session can be bound includes: The SMF network element receives a first request message from the terminal device, where the first request message includes an identifier of the first PDU session and information about the second PDU session, and the information about the second PDU session includes at least one of an identifier of the second PDU session, the second address, and type information of the second address; and the SMF network element determines, based on a first condition, that the first PDU session and the second PDU session can be bound; or the SMF network element receives a second request message from a terminal, where the second request message includes first indication information, and the first indication information indicates that the terminal supports a multi-PDU session distribution capability; and the SMF network element determines, based on a second condition, that the first PDU session and the second PDU session can be bound.

In a possible design, the first condition is: The first PDU session and the second PDU session have same characteristic information; or based on a PCF network element indication, the first PDU session and the second PDU session are allowed to be bound, where the characteristic information includes at least one of the following: a data network name DNN of a PDU session, slice selection information, application identification information, flow description information, a service and session continuity SSC mode, and a PDU session type. The second condition is: The first indication information indicates that the terminal device has a capability of binding the first PDU session and the second PDU session and that the first PDU session and the second PDU session can be bound; or the first indication information indicates that the terminal device has a capability of binding the first PDU session and the second PDU session, and the SMF network element receives information that is sent by the PCF network element and that indicates that the first PDU session and the second PDU session are allowed to be bound. For example, when the PCF network element determines that the first PDU session and the second PDU session have the same characteristic information, the PCF network element indicates the SMF network element to allow the first PDU session and the second PDU session to be bound. The characteristic information may include at least one of the following: the data network name DNN of the PDU session, the slice selection information, the application identification information, the flow description information, the SSC mode, and the PDU session type.

In a possible design, the first information includes at least one of the identifier of the first PDU session and the identifier of the second PDU session.

In a possible design, the first information further includes at least one of the first address of the first PDU session and type information of the first address, and/or at least one of the second address of the second PDU session and the type information of the second address. The first address is the IP address corresponding to the first PDU session, and the second address is the IP address corresponding to the second PDU session.

In a possible design, the first information further includes indication information, indicating to bind the first PDU session and the second PDU session.

A non claimed third aspect of embodiments of this application provides a data transmission method, including: A user plane function UPF network element receives a session message sent by an SMF session management function network element, where the session message includes at least one of the following: a first N4 session identifier, a second N4 session identifier, information indicating to bind a first PDU session and a second PDU session, a first address of the first PDU session, and a second address of the second PDU session, the first address is an IP address corresponding to the first PDU session, and the second address is an IP address corresponding to the second PDU session; and the UPF network element transmits data with a terminal device based on the bound first PDU session and the bound second PDU session.

In a possible design, that the UPF network element transmits data with a terminal device based on the bound first PDU session and the bound second PDU session includes: The UPF network element receives a data packet of a first service flow that is sent by the terminal device by using the first PDU session and/or the second PDU session, where a source address of the data packet of the first service flow includes the first address of the first PDU session and/or the second address of the second PDU session; and the UPF network element replaces the source address in a first data packet with a third address, where the third address is used by the UPF network element to interact with a server.

In a possible design, the method further includes: The UPF network element receives a first data packet of a third service flow sent by the server, where the first data packet of the third service flow includes an IP address of a terminal; the UPF network element replaces the IP address of the terminal of the data packet based on the first address or the second address, to obtain a second data packet of the third service flow; and the UPF network element sends the second data packet of the third service flow to the terminal device by using the first PDU session and/or the second PDU session.

A claimed fourth aspect of embodiments of this application provides a data transmission apparatus, used in a terminal device and including: a receiving module, configured to receive first information sent by a session management function SMF network element, where the first information indicates to bind a first packet data unit PDU session and a second PDU session; and a processing module, configured to transmit data based on the bound first PDU session and the bound second PDU session.

In a possible design, the first information includes at least one of an identifier of the first PDU session and an identifier of the second PDU session.

In a possible design, the first information further includes at least one of a first address of the first PDU session and type information of the first address, and/or at least one of a second address of the second PDU session and type information of the second address. The first address is an IP address corresponding to the first PDU session, and the second address is an IP address corresponding to the second PDU session.

In a possible design, the first information further includes indication information, indicating to bind the first PDU session and the second PDU session.

In a possible design, the apparatus further includes: a sending module, configured to send a first request message to the SMF network element, where the first request message includes the identifier of the first PDU session and information about the second PDU session, and the information about the second PDU session includes at least one of the identifier of the second PDU session, the second address of the second PDU session, and the type information of the second address, where
the receiving module is specifically configured to receive a response message that is sent by the SMF network element and that is of the first request message, where the response message of the first request message includes the first information.

In a possible design, the processing module is further configured to determine the information about the second PDU session according to a multi-PDU session policy, where the multi-PDU session policy indicates that a PDU session corresponding to the multi-PDU session policy has a binding capability.

In a possible design, the apparatus further includes: a sending module, configured to send a second request message to the SMF network element, where the second request message includes first indication information, and the first indication information indicates that the terminal device supports a multi-PDU session distribution capability; and the receiving module is further configured to receive a response message that is sent by the SMF network element and that is of the second request message, where the response message of the second request message includes the first information.

In a possible design, the processing module is specifically configured to: send a data packet of a first service flow by using the first PDU session and/or the second PDU session, where a source address of the data packet of the first service flow includes the first address of the first PDU session and/or the second address of the second PDU session; and/or
receive a data packet of a second service flow by using the first PDU session and/or the second PDU session, where a destination address of the data packet of the second service flow includes the first address of the first PDU session and/or the second address of the second PDU session.

In a possible design, the receiving module is further configured to receive the multi-PDU session policy sent by a policy control function PCF network element or locally configured.

In a possible design, the multi-PDU session policy is second indication information. The receiving module is specifically further configured to receive a first policy sent by the PCF network element, where the first policy includes the second indication information, and the second indication information indicates that a binding relationship is allowed to be established between PDU sessions established according to the first policy.

In a possible design, the receiving module is specifically further configured to receive a plurality of first policies sent by the PCF network element, where each first policy includes multi-PDU indication information, and a binding relationship is allowed to be established between PDU sessions that are established according to first policies including the same multi-PDU indication information.

In a possible design, the multi-PDU session policy includes a binding parameter, and the multi-PDU session policy indicates that a binding relationship is allowed to be established between PDU sessions including the same binding parameter.

In a possible design, the binding parameter includes at least one of the following information: a data network name DNN, slice selection information, application identification information, flow description information, a service and session continuity SSC mode, and a PDU session type.

In a possible design, the sending module is further configured to send a binding release request to the SMF network element, where the binding release request is used to request to release the binding between the first PDU session and the second PDU session.

A non claimed fifth aspect of embodiments of this application provides a session management function SMF network element including: a processing module, configured to determine that a first PDU session and a second PDU session can be bound; and a sending module, configured to send first information to a terminal device, where the first information indicates to bind the first PDU session and the second PDU session.

In a possible design, the sending module is further configured to send a session message to a user plane function UPF network element, where the session message includes at least one of the following: a first N4 session identifier, a second N4 session identifier, information indicating to bind the first PDU session and the second PDU session, a first address of the first PDU session, and a second address of the second PDU session. The first address is an IP address corresponding to the first PDU session, and the second address is an IP address corresponding to the second PDU session.

In a possible design, the processing module is specifically configured to: receive a first request message from the terminal device, where the first request message includes an identifier of the first PDU session and information about the second PDU session, and the information about the second PDU session includes at least one of an identifier of the second PDU session, the second address, and type information of the second address; and determine, based on a first condition, that the first PDU session and the second PDU can be bound; or receive a second request message from a terminal, where the second request message includes first indication information, and the first indication information indicates that the terminal supports a multi-PDU session distribution capability; and determine, based on a second condition, that the first PDU session and the second PDU session can be bound.

In a possible design, the first condition is: The first PDU session and the second PDU session have same characteristic information; or based on a PCF network element indication, the first PDU session and the second PDU session are allowed to be bound, where the characteristic information includes at least one of the following: a data network name DNN of a PDU session, slice selection information, application identification information, flow description information, a service and session continuity SSC mode, and a PDU session type. The second condition is: The first indication information indicates that the terminal device has a capability of binding the first PDU session and the second PDU session and that the first PDU session and the second PDU session can be bound; or the first indication information indicates that the terminal device has a capability of binding the first PDU session and the second PDU session, and the SMF network element receives information that is sent by the PCF network element and that indicates that the first PDU session and the second PDU session are allowed to be bound. For example, when the PCF network element determines that the first PDU session and the second PDU session have the same characteristic information, the PCF network element indicates the SMF network element to allow the first PDU session and the second PDU session to be bound. The characteristic information may include at least one of the following: the data network name DNN of the PDU session, the slice selection information, the application identification information, the flow description information, the SSC mode, and the PDU session type.

In a possible design, the first information includes at least one of the identifier of the first PDU session and the identifier of the second PDU session.

In a possible design, the first information further includes at least one of the first address of the first PDU session and type information of the first address, and/or at least one of the second address of the second PDU session and the type information of the second address. The first address is the IP address corresponding to the first PDU session, and the second address is the IP address corresponding to the second PDU session.

In a possible design, the first information further includes indication information, indicating to bind the first PDU session and the second PDU session.

A non claimed sixth aspect of embodiments of this application provides a user plane function UPF network element, including a receiving module, configured to receive a session message sent by an SMF session management function network element, where the session message includes at least one of the following: a first N4 session identifier, a second N4 session identifier, information indicating to bind a first PDU session and a second PDU session, a first address of the first PDU session, and a second address of the second PDU session, the first address is an IP address corresponding to the first PDU session, and the second address is an IP address corresponding to the second PDU session; and a processing module, configured to transmit data with a terminal device based on the bound first PDU session and the bound second PDU session.

In a possible design, the processing module is specifically configured to: receive a data packet of a first service flow that is sent by the terminal device by using the first PDU session and/or the second PDU session, where a source address of the data packet of the first service flow includes the first address of the first PDU session and/or the second address of the second PDU session; and replace the source address in a first data packet with a third address, where the third address is used by the UPF network element to interact with a server.

In a possible design, the receiving module is configured to receive a first data packet of a third service flow sent by the server, where the first data packet of the third service flow includes an IP address of a terminal; and the processing module, configured to: replace the IP address of the terminal of the data packet based on the first address or the second address, to obtain a second data packet of the third service flow, and send the second data packet of the third service flow to the terminal device by using the first PDU session and/or the second PDU session.

A non claimed seventh aspect of embodiments of this application provides a communication apparatus. The communication apparatus may be a chip or a system-on-a-chip in a terminal device, and includes a processor and an interface circuit. The interface circuit is configured to receive code instructions and transmit the code instructions to the processor. The processor is configured to run the code instructions, to perform the method in any one of the first aspect or the possible designs of the first aspect.

An non claimed eighth aspect of embodiments of this application provides an SMF network element, which may be a chip or a system-on-a-chip, and includes a processor and an interface circuit. The interface circuit is configured to receive and transmit code instructions to the processor. The processor is configured to run the code instructions, to perform the method in any one of the second aspect or the possible designs of the second aspect.

A non claimed ninth aspect of embodiments of this application provides a UPF network element, which may be a chip or a system-on-a-chip, and includes a processor and an interface circuit. The interface circuit is configured to receive code instructions and transmit the code instructions to the processor. The processor is configured to run the code instructions, to perform the method in any one of the third aspect or the possible designs of the third aspect.

A claimed tenth aspect of embodiments of this application provides a computer-readable storage medium. The computer-readable storage medium is configured to store a computer program, and the computer program is configured to implement the method in any one of the first aspect or the possible designs of the first aspect.

An non claimed eleventh aspect of embodiments of this application provides a computer-readable storage medium. The computer-readable storage medium is configured to store a computer program, and the computer program is configured to implement the method in any one of the second aspect or the possible designs of the second aspect.

A non claimed twelfth aspect of embodiments of this application provides a computer-readable storage medium. The computer-readable storage medium is configured to store a computer program, and the computer program is configured to implement the method in any one of the third aspect or the possible designs of the third aspect.

A non claimed thirteenth aspect of embodiments of this application provides a communication system, including the communication apparatus in the fourth aspect and the corresponding feasible implementations, the SMF network element in the fifth aspect and the corresponding feasible implementations, and the UPF network element in the sixth aspect and the corresponding feasible implementations.

It should be understood that technical solutions in the second to the thirteenth aspects of embodiments of this application correspond to technical solutions in the first aspect of embodiments of this application, and beneficial effects achieved by the aspects and the corresponding feasible implementations are similar. Details are not described again.

### BRIEF DESCRIPTION OF DRAWINGS

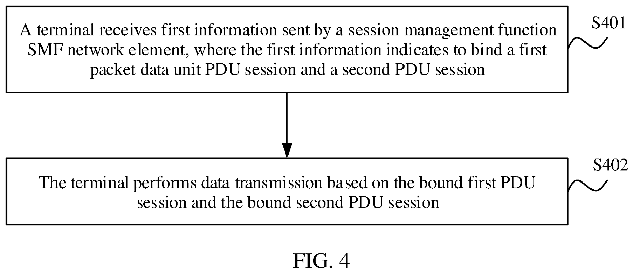

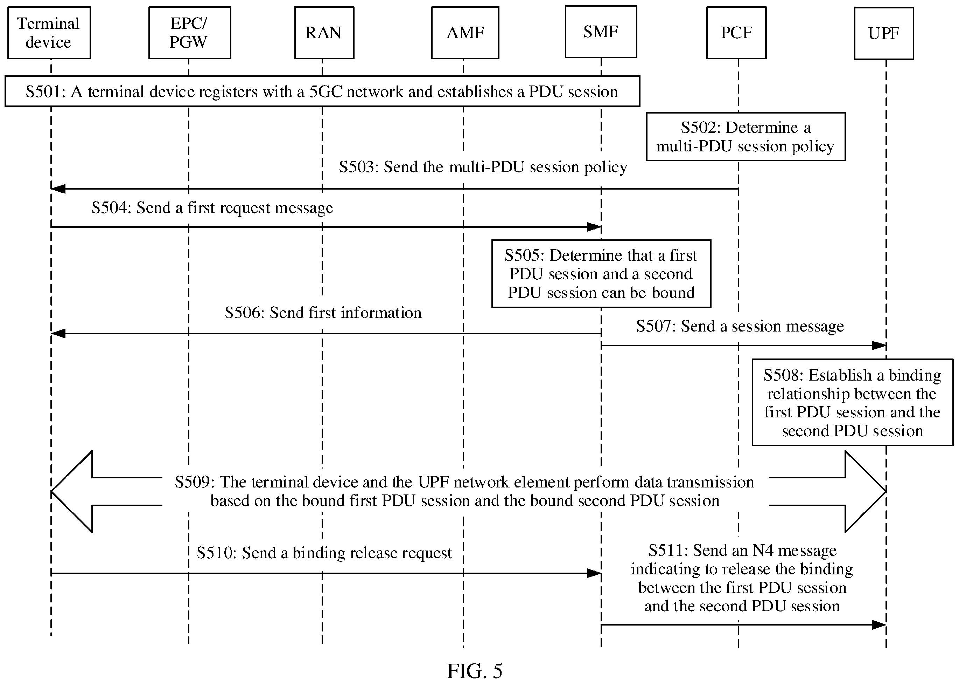

In the following, figures 4 and 5 and their description are according to the claimed invention. The remaining description does not or does not fully correspond to the claimed invention but is useful for understanding the invention.

FIG. 1 is a schematic diagram of existing multi-PDU session access:
FIG. 2 is a schematic diagram of a network architecture according to an embodiment of this application;
FIG. 3 is another schematic diagram of a network architecture according to an embodiment of this application;
FIG. 4 is a schematic flowchart of a data transmission method according to an embodiment of this application;
FIG. 5 is a signaling flowchart of a data transmission method according to an embodiment of this application;
FIG. 6 is a signaling flowchart of another data transmission method according to an embodiment of this application;
FIG. 7 is a schematic diagram of a structure of a communication apparatus according to an embodiment of this application;
FIG. 8 is a schematic diagram of a structure of an SMF network element according to an embodiment of this application;
FIG. 9 is a schematic diagram of a structure of a UPF network element according to an embodiment of this application; and
FIG. 10 is a schematic diagram of a hardware structure of a communication apparatus according to an embodiment of this application.

### DESCRIPTION OF EMBODIMENTS

Embodiments of this application provide a data transmission method. The method in embodiments of this application may be applied to a 5th generation (5th generation, 5G) mobile communication system, or may be applied to long term evolution (long term evolution, LTE). The 5G system is also referred to as a new wireless communication system, a new access technology (new radio, NR), or a next generation mobile communication system.

For example, FIG. 2 is a schematic diagram of a network architecture according to an embodiment of this application. The architecture supports access to a core network (core network, CN) by using a wireless technology (for example, LTE or a 5G radio access network (radio access network, RAN)) that is defined by the 3rd Generation Partnership Project (3rd generation partnership project, 3GPP) standard group, and supports access to the core network by using a non-3GPP access technology through a non-3GPP interworking function (non-3GPP interworking function, N3IWF) or a next generation access gateway (next generation packet data gateway, ngPDG).

The network architecture includes a terminal device, an access network (access network, AN), a core network, and a data network (data network, DN). An access network apparatus is mainly configured to implement functions such as a radio physical layer function, resource scheduling, radio resource management, radio access control, and mobility management. A core network device may include a management device and a gateway device. The management device is mainly used for device registration, security authentication, mobility management, location management, and the like of the terminal device. The gateway device is mainly configured to establish a channel with the terminal device, and forward a data packet between the terminal device and an external data network on the channel. The data network may include a network device (for example, a device such as a server or a router), and the data network is mainly used to provide a plurality of data services for the terminal device. For example, an access network, a core network, and a data network in 5G are used as examples for description.

The access network in 5G may be a radio access network (radio access network, (R)AN). A (R)AN device in the 5G system may include a plurality of 5G-(R)AN nodes. The 5G-(R)AN node may include an access point (access point, AP) in a 3GPP access network or a non-3GPP access network such as a Wi-Fi network, a next generation base station (including a new radio base station (NR NodeB, gNB), a next generation evolved base station (NG-eNB), a gNB in which a central unit (central unit, CU) and a distributed unit (distributed unit, DU) are separated, and the like, which may be collectively referred to as a next generation radio access network node (NG-RAN node)), a transmission reception point (transmission receive point, TRP), a transmission point (transmission point, TP), or another node.

The 5G core network (5G core/new generation core, 5GC/NGC) includes a plurality of functional units such as an access and mobility management function (access and mobility management function, AMF) network element, a session management function (session management function, SMF) network element, a user plane function (user plane function, UPF) network element, an authentication server function (authentication server function, AUSF) network element, a policy control function (policy control function, PCF) network element, an application function (application function, AF) network element, a unified data management (unified data management, UDM) function network element, a network slice selection function (network slice selection function, NSSF) network element, and a network element function (network element function, NEF) network element.

The AMF network element is mainly responsible for services such as mobility management and access management. The SMF network element is mainly responsible for session management, a dynamic host configuration protocol function, user plane function selection and control, and the like. The UPF network element is mainly responsible for functions related to external connection to a data network (data network, DN), user plane data packet routing and forwarding, packet filtering, quality of service (quality of service, QoS) control, and the like. The DN mainly provides a service for user equipment, for example, provides a mobile operator service, an internet service, or a third-party service. The AUSF network element is mainly responsible for a function of authenticating the terminal device. The PCF network element is mainly responsible for providing a unified policy framework for network behavior management, providing a policy rule for a control plane function, obtaining registration information related to policy decision, and the like. It should be noted that these functional units may independently work, or may be combined to implement some control functions, such as access control and mobility management functions such as access authentication, security encryption, and location registration of the terminal device, and session management functions such as establishment, release, and change of a user plane transmission path. The UDM network element is used for unified user data management, and is mainly configured to store user equipment subscription data.

Functional units in the 5G system may communicate with each other through a next generation (next generation, NG) network interface. For example, the terminal device may transmit a control plane message with the AMF network element through an NG interface 1 (N1 for short). The RAN device may establish a user plane data transmission channel with the UPF through an NG interface 3 (N3 for short). The AN/RAN device may establish a control plane signaling connection to the AMF network element through an NG interface 2 (N2 for short). The UPF may exchange information with the SMF network element through an NG interface 4 (N4 for short). The UPF may exchange user plane data with the data network DN through an NG interface 6 (N6 for short). The AMF network element may exchange information with the SMF network element through an NG interface 11 (N11 for short). The SMF network element may exchange information with the PCF network element through an NG interface 7 (N7 for short). The AMF network element may exchange information with the AUSF through an NG interface 12 (N12 for short).

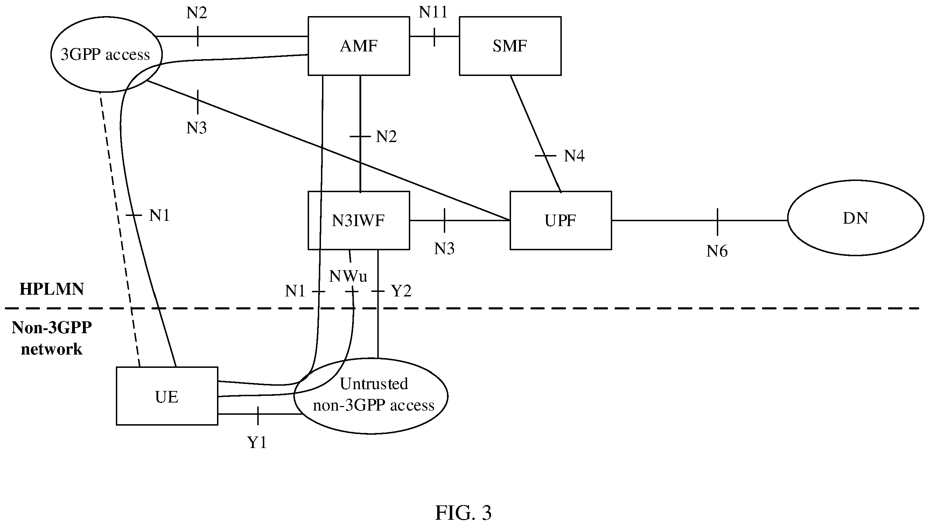

For example, FIG. 3 is a schematic diagram of a specific network architecture when a core network supports untrusted non-3GPP access (untrusted non-3GPP access). A network architecture in a home public land mobile network (home public land mobile network, HPLMN) is similar to the implementation in FIG. 2, and details are not described herein again. The untrusted non-3GPP access may be untrusted wireless local area network (wireless local area network, WLAN) access. In this architecture, the terminal device may further exchange information with the AMF by using the untrusted non-3GPP access, the non-3GPP interworking function (non-3GPP interworking function, N3IWF), or a non-3GPP access gateway, and an N3IWF network element may exchange information with the UPF through the N3.

In addition, the core network may further support trusted non-3GPP access and/or fixed network access. A trusted non-3GPP network includes a trusted WLAN network, and a fixed network includes fixed home network access and the like. A network side architecture is similar to an untrusted non-3GPP network architecture. The N3IWF and an untrusted access network are replaced with a trusted non-3GPP access network, or the N3IWF is replaced with a trusted non-3GPP access gateway, and the untrusted access network is replaced with a trusted access network. Access network devices between the terminal device and the trusted non-3GPP access gateway may include a WLAN AP, a fixed access network (fixed access network, FAN) device, a switch, a router, and the like.

Regardless of the trusted non-3GPP access or the untrusted non-3GPP access, a point-to-point interface protocol shown in FIG. 2 may be used on a core network side, or a service-based interface architecture consistent with a 3GPP access core network architecture is used. This is not specifically limited in embodiments of this application.

It should be noted that the method processing in embodiments of this application may be applied to the foregoing 5G 3GPP access architecture, a non-3GPP access architecture, or an architecture in which 3GPP access and non-3GPP access are performed simultaneously, or may be applied to an architecture in which 5G cellular (NG-RAN) access and 4G cellular (LTE) access are performed simultaneously, or the like. A network architecture is not specifically limited in embodiments of this application. In addition, FIG. 2 and FIG. 3 are merely examples of architectural diagrams. In addition to the functional units shown in FIG. 2 and FIG. 3, the network architecture may further include another functional unit.

Based on the foregoing network structure, the claimed invention provides a data transmission method. FIG. 4 is a schematic flowchart of a data transmission method according to the claimed invention. The method provided in this embodiment includes the following steps.

Step S401: A terminal device receives first information sent by an SMF network element, where the first information indicates to bind a first PDU session and a second PDU session.

Step S402: The terminal device transmits data based on the bound first PDU session and the bound second PDU session.

In this embodiment of this application, a PDU session may represent: a PDU session established between the terminal device and the 5G core network (5G core, 5GC) or a service flow in the session; a PDN connection established between the terminal device and an EPC network or a service flow in the PDN connection; or an IP connection in which the terminal device performs non-seamless offloading (non-seamless WLAN offload) through a non-3GPP access network (for example, WLAN access) or a service flow in the connection.

In this embodiment of this application, the bound first PDU session and the bound second PDU session may implement distribution and transmission of the service flow. Specifically, the terminal device may schedule a data packet of the service flow between the first PDU session and the second PDU session based on the bound first PDU session and the bound second PDU session.

For example, the terminal device may transmit, in the first PDU session, all data packets of the service flow; transmit, in the second PDU session, all data packets of the service flow; or transmit, in the first PDU session, some data packets of the service flow, and transmit, in the second PDU session, the other data packets of the service flow. In a transmission process of the data packet of the service flow, the terminal device may alternatively schedule the data packet in real time based on respective transmission statuses of the first PDU session and the second PDU session. This is similar to the implementation process of the multi-access PDU session A in FIG. 1 in a current technology.

However, the multi-access PDU session A and a single-access PDU session in the current technology are two different session forms. In the current technology, a multi-PDU session can be implemented only in a session form of establishing a multi-access PDU session. For example, it is assumed that a single-access PDU session 1 and a single-access PDU session 2 have been established between the terminal device and a UPF network element, the single-access PDU session 1 uses an access technology 1, and the single-access PDU session 2 uses an access technology 2. If a multi-PDU session that is between the terminal device and the UPF network element and that is based on the access technology 1 and the access technology 2 needs to be implemented, the single-access PDU session 1 and the single-access PDU session 2 have no function. A multi-access PDU session that is based on the access technology 1 and the access technology 2 needs to be re-established. However, in this embodiment of this application, the multi-PDU session can be implemented only by binding two independent sessions: the first PDU session and the second PDU session, without a need to re-establish the multi-access PDU session. Therefore, a manner of implementing the multi-PDU session is simpler. In addition, in the current technology, an IP connection in which distribution is performed through a WLAN network cannot be bound to a PDU session. However, in this embodiment of this application, one of the PDU sessions may alternatively be the foregoing IP connection in which distribution is performed through the WLAN network.

In this embodiment of this application, both the first PDU session and the second PDU session may be single-access PDU sessions or multi-access PDU sessions, or one of the first PDU session and the second PDU session is a single-access PDU session and the other is a multi-access PDU session. This is not specifically limited in this embodiment of this application.

It may be understood that, regardless of whether the first PDU session and the second PDU session are single-access PDU sessions or multi-access PDU sessions, an implementation principle thereof is similar. For ease of description, an example in which both the first PDU session and the second PDU session are single-access PDU sessions is subsequently used for description in this embodiment of this application.

For example, the first PDU session and the second PDU session may be single-access PDU sessions using a same access technology, or may be single-access PDU sessions using different access technologies. For example, if the first PDU session is a single-access PDU session 1, and the second PDU session is a single-access PDU session 2, a binding relationship between the single-access PDU session 1 and the single-access PDU session 2 is allowed to be established. The PDU session 1 may be a PDU session on a 3GPP access side, and the PDU session 2 may be a PDU session on a non-3GPP access side. Alternatively, both the PDU session 1 and the PDU session 2 may be single-access PDU sessions on a 3GPP access side, or may be single-access PDU sessions on a non-3GPP side. Alternatively, the PDU session 1 may be a PDU session for 5G cellular access, and the PDU session 2 may be a PDU session for 4G cellular access. It should be noted that a PDU session established in a 4G cellular side core (evolved packet core, EPC) network is referred to as a public data network (public data network, PDN) connection. For ease of description, subsequent single-access PDU sessions are collectively referred to as a PDU session for short.

In this embodiment of this application, the SMF network element may determine, according to a policy, that the first PDU session and the second PDU session can be bound, and send, to the terminal device, first indication information indicating to bind the first PDU session and the second PDU session. In this case, the terminal device may receive the first information sent by the SMF network element, and transmit data based on the bound first PDU session and the bound second PDU session. Specific content of the policy and a specific data transmission process may be determined based on an actual application scenario. This is not specifically limited in this embodiment of this application.

In the claimed invention, the terminal device initiates a multi-PDU session binding procedure. The SMF network element indicates, to the terminal device based on the initiation of the terminal device, the first PDU session and the second PDU session that are to be bound. In this process, each network element on a network side may perform respective steps to determine the bound first PDU session and the bound second PDU session. A specific implementation process is described in detail in the embodiment corresponding to FIG. 5, and details are not described herein again.

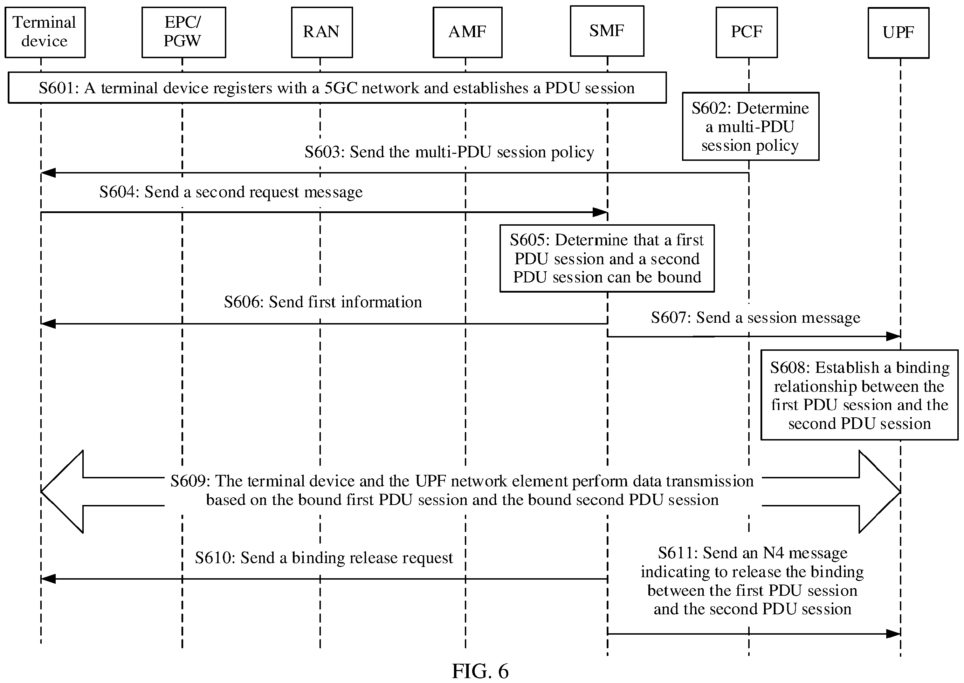

In another possible implementation of this embodiment of this application, a network side may initiate a multi-PDU session binding procedure. The SMF network element may actively indicate, to the terminal device, the first PDU session and the second PDU session that are to be bound. In this process, each network element on the network side may perform respective steps to determine the bound first PDU session and the bound second PDU session. A specific implementation process is described in detail in the embodiment corresponding to FIG. 6, and details are not described herein again.

In conclusion, in this embodiment of this application, the multi-PDU session can be implemented only by binding independent first PDU session and second PDU session, without a need to re-establish the multi-access PDU session. Therefore, a manner of implementing the multi-PDU session is simpler.

FIG. 5 is a signaling flowchart of a data transmission method according to the invention. As shown in FIG. 5, the method provided in this embodiment includes the following steps.

Step S501: A terminal device registers with a 5GC network and establishes a PDU session.

In this embodiment of this application, the terminal device can establish one or more PDU sessions. The one or more PDU sessions may all be single-access PDU sessions established between the terminal device and the 5G core network, single-access PDU sessions established between the terminal device and a 4G core network, or IP connections in which the terminal device performs non-seamless offloading through a WLAN network. Alternatively, one part of the plurality of PDU sessions (for example, one of the PDU sessions) may be a single-access PDU session established between the terminal device and the 5G core network, and the other part (for example, the other PDU session) is a single-access PDU session established between the terminal device and the 4G core network. Alternatively, one part of the plurality of PDU sessions (for example, one of the PDU sessions) is a single-access session established between the terminal device and the 5GC, and the other part (for example, the other PDU session) is an IP connection in which the terminal device performs non-seamless offloading through the WLAN network. The PDU session is not specifically limited in this embodiment of this application.

For example, the terminal device may first establish a PDN connection (corresponding to the PDU session) to the 4G EPC. For example, a default bearer identifier of the PDN connection may be 1, and the 4G system uses the default bearer identifier to uniquely identify one PDN connection. Subsequently, the terminal device registers with the 5GC network, and then the terminal device initiates a PDU session establishment procedure to establish a PDU session in the 5GC network.

Alternatively, after registering with the 5GC network, the terminal device initiates a PDU session establishment procedure to establish one or more PDU sessions.

Subsequently, the terminal device accesses the WLAN network, obtains a UE IP address allocated by the WLAN network, and then establishes an IP connection to a target server through the WLAN network. It should be noted that the IP connection may be a direct connection established to the target server without using the 5GC network or the EPC network. Therefore, the IP connection is referred to as a non-seamless service flow (non-seamless WLAN offload). A sequence of establishing the PDU session and the IP connection is not limited in this embodiment of this application.

In this embodiment of this application, when the terminal device establishes the PDN connection in the 4G system, related network elements may include the terminal device and the EPC or a PDN gateway (PDN gateway, PGW). When the terminal device establishes the PDU session in the 5GC network, related network elements may include the terminal device, a RAN, an AMF network element, and an SMF network element. In other words, the network elements in FIG. 5 in this embodiment of this application are not necessary. In addition, because the terminal device establishing the PDN connection, the PDU session, or the IP connection and registering with the 5GC network are common technologies, specific processes of establishing the PDU session by the terminal device and registering with the 5GC network by the terminal device are not described herein again.

It should be noted that, in this embodiment of this application, the first PDU session and the second PDU session may be two PDU sessions pre-established in this step. In a subsequent step, the terminal device may initiate a binding procedure for the first PDU session and the second PDU session based on identifiers of the two PDU sessions and the like. Alternatively, one of the first PDU session and the second PDU session is pre-established in this step. In a subsequent step, the terminal device may directly request another PDU session used for binding. This is not specifically limited in this embodiment of this application.

Step S502: A PCF network element determines a multi-PDU session policy.

In this embodiment of this application, the multi-PDU session policy indicates that a PDU session corresponding to the multi-PDU session policy has a binding capability.

For example, the multi-PDU session policy may have the following implementations.

In an optional implementation, a first policy includes second indication information (which may also be referred to as multi-PDU session indication information). The second indication information is the multi-PDU session policy, and the second indication information may indicate that a binding relationship is allowed to be established between PDU sessions established according to the first policy.

For example, the first policy may be a route selection policy (UE route selection policy, URSP). A conventional URSP policy may include at least one of parameters such as application identification information, flow description information, and a data network name (data network name, DNN), and include a PDU session feature used by a service flow of at least one of the parameters. The application identification information may be a name of an application (application, APP) or the like, the flow description information may be an internet protocol (internet protocol, IP) quintuple or the like, and the DNN may be a name of a target network or the like. The PDU session feature includes a PDU session type (for example, an internet type or an Ethernet type), a service and session continuity (session and service continuity, SSC) mode, slice selection information, a preferred technology access type, and the like.

In this embodiment of this application, the second indication information included in a URSP policy may indicate that a binding relationship is allowed to be established between PDU sessions of a same type. The PDU sessions of the same type may be PDU sessions whose at least one parameter of the DNN, the slice selection information, an application identifier, the flow description information, the SSC mode, and the PDU session type is the same.

The second indication information may be any value, character string, or the like. For example, a URSP 1 policy includes DNN=1, slice=1, where a PDU type is IPv4, an SSC mode is 1, and the second indication information is included. If the terminal device establishes a PDU session 1 and a PDU session 2 according to the URSP 1, a binding relationship is allowed to be established between the PDU session 1 and the PDU session 2. Alternatively, the terminal device establishes the PDU session 1 according to the URSP 1, and establishes the PDU session 2 according to another policy, but the PDU session 2 and the PDU session 1 have a same DNN or a same slice. In this case, the binding relationship can also be established between the PDU session 1 and the PDU session 2.

In another optional implementation, the URSP policy includes multi-PDU session indication information. The multi-PDU session indication information is an enumerated type parameter. There may be one or more enumerated type parameters. The binding relationship is allowed to be established between PDU sessions that have same multi-PDU session indication information. For example, a URSP policy 1 includes a multi-PDU session indication 1, a URSP policy 2 includes the multi-PDU session indication 1, and a URSP policy 3 includes a multi-PDU session indication 2. If the terminal device establishes the PDU session 1 according to the URSP 1, the PDU session 2 according to the URSP 2, and a PDU session 3 according to the URSP 3, the binding relationship is allowed to be established between the PDU session 1 and the PDU session 2 because multi-PDU session indication information of both the PDU session 1 and the PDU session 2 is 1, but the binding relationship cannot be established between the PDU session 1 and the PDU session 3 because the multi-PDU session indication information of the PDU session 1 is different from that of the PDU session 3. It may be understood that when the enumerated type parameter has only one value, the enumerated type parameter may indicate that the binding relationship is allowed to be established between PDU sessions corresponding to a URSP policy including the multi-PDU session indication information.

In still another optional implementation, the multi-PDU session policy includes a binding parameter, and the multi-PDU session policy indicates that the binding relationship is allowed to be established between PDU sessions including the same binding parameter. For example, the binding parameter may include at least one of the following information: a DNN, slice selection information, application identification information, flow description information, an SSC mode, and a PDU session type.

Step S503: The PCF network element sends the multi-PDU session policy to the terminal device.

The PCF network element may send the multi-PDU session policy to the terminal device in a process in which the terminal device registers with the 5GC network, a process in which the terminal device establishes a PDU session, or a process in which the terminal device initiates PDU session update.

In this embodiment of this application, when the multi-PDU session policy is included in the first policy, the PCF network element may send the first policy including the PDU session policy to the terminal device. When the multi-PDU session policy includes the binding parameter, the PCF network element may send the binding parameter to the terminal device. It may be understood that, in actual application, the PCF network element may send the multi-PDU session policy to the terminal device in any form with reference to an actual application scenario. This is not specifically limited in this embodiment of this application.

It should be noted that, in an optional implementation, the terminal device may locally configure the multi-PDU session policy. The multi-PDU session policy is the same as that described above. Alternatively, the multi-PDU session policy may be implemented based on the terminal device. It may be understood that in this implementation, step S502 and step S503 may not be performed. In other words, step S502 and step S503 in this embodiment of this application may be optional steps.

Step S504: The terminal device sends in the invention a first request message to the SMF network element

In this embodiment of this application, the terminal device may support a multi-PDU session distribution function, and the multi-PDU session distribution function includes the following: a multipath transmission control protocol (multipath TCP, MPTCP) function, a multipath internet transmission protocol (multipath quick UDP internet connection, MP-QUIC) function, a QUIC function, an access traffic splitting steering switching (access traffic splitting steering switching, ATSSS) function, a multi-connection distribution function, or the like. Correspondingly, a UPF network element that subsequently performs a multi-PDU session with the terminal device may also support the multi-PDU session distribution function. It should be noted that, different from an MPTCP function on the terminal device side, the multi-PDU session distribution function may be referred to as an MPTCP proxy function on the UPF network element side. To be specific, a function of performing PDU connection binding and/or transmitting a data packet of a service flow by using a corresponding UE IP on the terminal device and the UPF network element may be a "multi-PDU session distribution function", or referred to as a "multi-PDU session binding function" or a "multi-PDU session binding distribution function". Optionally, the multi-PDU session distribution function on the terminal device and the UPF network element may be enabled by the SMF through authorization.

In this embodiment of this application, the first request message includes an identifier of the first PDU session and information about the second PDU session. The information about the second PDU session includes at least one of an identifier of the second PDU session, a second address of the second PDU session, and type information of the second address.

The identifier of the first PDU session may be a name, a sequence number, a default bearer identifier (when a PDN connection is bound, the default bearer identifier is 1), or the like of the first PDU session. A first address of the first PDU session may be a UE IP address corresponding to the first PDU session. Type information of the first address is an address type of the first address. The identifier of the second PDU session may be a name, a sequence number, a default bearer identifier (when a PDN connection is bound, the default bearer identifier is 1), or the like of the second PDU session. The second address of the second PDU session may be a UE IP address corresponding to the second PDU session. The type information of the second address is an address type of the second address. It should be noted that a bound PDU session may have a plurality of UE IP addresses, and different IP addresses have different address types. For example, one PDU session includes one UE IPv4 address and one UE IPv6 address, and a UE IP address corresponding to the PDU session may be determined based on a corresponding UE IP address type (for example, an IPv4 or IPv6 address type). Specifically, the UE IP address corresponding to the PDU session is one UE IP address that is of the PDU session and that is allocated by a network side (the 5GC network, the EPC network, or the WLAN network) to the UE. The multi-PDU session distribution function may split and converge the data packet of the service flow based on the foregoing corresponding UE IP. The UE IP address corresponding to the PDU session may be used only in the 5GC network or the EPC network. In other words, the corresponding UE IP address is invisible to an external server (that is, a server that subsequently interacts with the UPF network element). In this case, the corresponding UE IP address may also be referred to as a local link UE IP address. Alternatively, if the UE IP address corresponding to the PDU session is available in an external network, that is, visible to an external server, the corresponding UE IP address is a PDU IP address allocated by the network side (the 5GC network, the EPC network, or the like) to the terminal device, or a UE IP address allocated by the WLAN network to the terminal device for accessing the WLAN network. The corresponding UE IP address may also be referred to as a bound UE IP address, that is, a UE IP address used by the multi-PDU session distribution function to bind two subservice flows to each other to implement splitting and convergence of the service flow. When the PDU session has only one UE IP address, the UE IP address corresponding to the PDU session is the UE IP address of the PDU session. In other words, the UE IP corresponding to the PDU session is the same as the UE IP address of the PDU session.

In this embodiment of this application, the first request message may be a PDU session establishment request message, a PDU session update request message, or the like.

For example, if the first PDU session is pre-established in the terminal device, and the terminal device requests to bind the second PDU session and the first PDU session when establishing the second PDU session, the terminal device may send the PDU session establishment request message to the SMF network element. The PDU session establishment request message includes the identifier of the second PDU session and at least one of the following: the first address corresponding to the first PDU session and corresponding type information of the first address. It may be understood that because the second PDU session is a newly established session, a corresponding UE IP address that is the same as that of the first PDU session may be allocated to the second PDU session, or a corresponding UE IP address that is different from that of the first PDU session may be allocated to the second PDU session. It may be understood that when the first PDU session has a plurality of IP addresses, one of the UE IP addresses may be selected as a corresponding UE IP address subsequently used for service flow splitting and convergence. If the first PDU session has only one UE IP, the UE IP may be a UE IP address corresponding to the PDU session. This is not specifically limited in this embodiment of this application.

For example, when the first PDU session and the second PDU session are pre-established in the terminal device, the terminal device may send a first PDU session update request message to the SMF network element. The session update request message may include the identifier of the first PDU session and at least one of the following: the identifier of the second PDU session, the second address of the second PDU session and the type information of the second address.

In actual application, in the 5GC network, the first request message of the terminal device may be carried in a non-access stratum (non-access stratum, NAS) transmission message and sent to the AMF network element, and then the AMF network element forwards the first request message to the SMF network element. On a 4G EPC side, the first request message of the terminal device may be a PDN connection establishment request message or an update request message, and the information about the first PDU session and/or the information about the second PDU session are/is carried in a protocol configuration parameter PCO and sent to the SMF network element. A specific manner of sending the first request message by the terminal device to the SMF network element is not limited in this embodiment of this application.

Optionally, in this embodiment of this application, before sending the first request message to the SMF network element, the terminal device may determine the information about the second PDU session according to the multi-PDU session policy. For example, the terminal device may determine information about a second PDU session that has a same binding parameter as the first PDU session. The binding parameter may include at least one of the following information: a DNN of the PDU session, slice selection information, application identification information, flow description information, an SSC mode, and a PDU session type.

To be specific, in this embodiment of this application, the terminal device may first determine information about a second PDU session that can be bound to the first PDU session. Therefore, when the terminal device sends the first request message to the SMF network element, there is a high probability that the first PDU session and the second PDU session can be bound. In comparison with an implementation in which the terminal device randomly selects information about the two PDU sessions and sends the information to the SMF network element, efficiency and a success rate of binding the first PDU session and the second PDU session in this embodiment of this application are higher.

Step S505: The SMF network element determines that the first PDU session and the second PDU session can be bound.

In this embodiment of this application, the SMF network element may receive, from the AMF network element, an indication that the first PDU session and the second PDU session can be bound. Alternatively, the SMF network element may be used as an execution body to determine, according to a local configuration policy, that the first PDU session and the second PDU session can be bound. Alternatively, the SMF network element may receive, from the PCF network element, an indication that the first PDU session and the second PDU session can be bound. This is not specifically limited in this embodiment of this application.

In an optional implementation, the AMF network element receives the NAS transmission message sent by the terminal device, and obtains the identifier of the first PDU session and the information about the second PDU session that are in the first request message from the NAS transmission message. The information about the second PDU session includes at least one of the identifier of the second PDU session, the second address of the second PDU session, and the type information of the second address. The AMF network element may determine, according to a policy, whether the first PDU session and the second PDU session are allowed to be bound. For example, when the AMF network element determines that the first PDU session and the second PDU session have the same DNN, slice selection information, application identification information, flow description information, or PDU session type, the AMF network element determines that the first PDU session and the second PDU session are allowed to be bound. In this case, the AMF network element may select a same SMF network element for the first PDU session and the second PDU session, indicate the SMF network element that the first PDU session and the second PDU session are allowed to be bound, and forward the first request message to the SMF network element.

In another optional implementation, the SMF network element obtains the identifier of the first PDU session and the information about the second PDU session from the first request message sent by the terminal device. Alternatively, the SMF network element obtains, from a PDU session management (session management, SM) context request or update message, the identifier of the first PDU session and the information about the second PDU session that are forwarded by the AMF network element. Alternatively, the SMF network element obtains the information of the second PDU session from the first request message, and obtains the identifier of the first PDU session from an SM context. A specific manner in which the SMF network element obtains the identifier of the first PDU session and the information about the second PDU session is not limited in this embodiment of this application. Further, the SMF network element may determine, according to a policy, whether two PDU sessions are allowed to be bound. For example, when the SMF network element determines that the first PDU session and the second PDU session have the same DNN, slice selection information, application identification information, flow description information, SSC mode, or PDU session type, the SMF network element determines that the first PDU session and the second PDU session are allowed to be bound.

In another optional implementation, the SMF network element sends the information about the first PDU session and/or the information about the second PDU session to the PCF network element, and the PCF network element determines, according to a policy, whether two PDU sessions are allowed to be bound. For example, when the PCF network element determines that the first PDU session and the second PDU session have the same DNN, slice selection information, application identification information, flow description information, SSC mode, or PDU session type, the PCF network element determines that the first PDU session and the second PDU session are allowed to be bound. When the binding is allowed, the PCF network element sends at least one of a binding success indication or a distribution policy to the SMF network element, so that the SMF network element may determine, based on the binding success indication or the distribution policy, that the first PDU session and the second PDU session are allowed to be bound.

In this embodiment of this application, a UE IP address corresponding to the bound PDU session may also be referred to as a bound UE IP address or a UE IP address used for distribution. The corresponding UE IP address may be used to encapsulate an IP address of a terminal device that transmits a data packet of a service flow in the bound PDU session. IP addresses corresponding to different PDU sessions may be the same or may be different. For example, the PDU session 1 and the PDU session 2 are bound, where an IP address corresponding to the PDU session 1 is a UE IP 1, and an IP address corresponding to the PDU session 2 is a UE IP 2. The UE IP 1 and the UE IP 2 may be a same corresponding IP address. In other words, the corresponding IP address is shared by the PDU session 1 and the PDU session 2. Alternatively, the UE IP 1 and the UE IP 2 are different corresponding IP addresses. In other words, corresponding UE IP addresses allocated to different PDU sessions are different.

For example, there may be the following several cases of respective IP addresses of the two bound PDU sessions and bound IP addresses (which may also be referred to as corresponding UE IP addresses).

In a possible manner, each PDU session has only one UE IP address. For example, an IP address of the PDU session (session) 1 is the UE IP 1, and a bound IP address is the UE IP 1. An IP address of the PDU session 2 is the UE IP 2, and a bound IP address is the UE IP 2. The UE IP 1 and the UE IP 2 are different IP addresses, or the UE IP 1 and the UE IP 2 are the same IP address.

In another possible manner, each PDU session has at least one UE IP address, for example, two UE IP addresses. For example, IP addresses of the PDU session 1 include the UE IP 1 and the UE IP 2, and a bound IP address is the UE IP 1. IP addresses of the PDU session 2 include a UE IP 3 and a UE IP 4, and a bound IP address is the UE IP 3. The UE IP 1, the UE IP 2, the UE IP 3 and the UE IP 4 are different IP addresses. Alternatively, the UE IP 1 and the UE IP 3 are a same IP address, and are different from the UE IP 2 and the UE IP 4.

In still another possible manner, one PDU session has only one UE IP address, and another PDU session has at least one UE IP address. For example, an IP address of the PDU session 1 is the UE IP 1, and a bound IP address is the UE IP 1. IP addresses of the PDU session 2 include the UE IP 3 and the UE IP 4, and a bound IP address is the UE IP 3. The UE IP 1, the UE IP 3, and the UE IP 4 are different IP addresses. Alternatively, the UE IP 1 and the UE IP 3 are a same IP address, and the UE IP 1 and the UE IP 4 are different IP addresses.

It may be understood that if it is determined that the first PDU session and the second PDU session cannot be bound, the SMF network element may send, to the terminal device, at least one of indication information indicating a binding failure and information indicating a binding failure cause. For example, the SMF network element may send a PDU session failure message, a PDU session establishment failure message, or a PDU update failure message to the terminal device. The message may include at least one of the indication information indicating a binding failure and the information indicating a binding failure cause. Alternatively, if the terminal device sends the first request message on the 4G EPC side, a PGW network element may carry at least one of the indication information indicating a binding failure and the information indicating a binding failure cause in the PCO parameter.

If it is determined that the first PDU session and the second PDU session are allowed to be bound, a subsequent step is performed in the claimed invention.

Step S506: The SMF network element sends in the invention first information to the terminal device.

In this embodiment of this application, the first information indicates the terminal device to bind the first PDU session and the second PDU session.

Optionally, the first information includes at least one of the identifier of the first PDU session and the identifier of the second PDU session. For example, the first information may include one of PDU session identifiers of the first PDU session and the second PDU session, or at least one of an IP address of the PDU session, a corresponding IP address, or type information of the corresponding IP address.

Optionally, the first information further includes at least one of the first address of the first PDU session and the type information of the first address, and/or at least one of the second address of the second PDU session and the type information of the second address. The first address is an IP address corresponding to the first PDU session, and the second address is an IP address corresponding to the second PDU session.

Optionally, the first information further includes indication information, indicating to bind the first PDU session and the second PDU session. It may be understood that after the SMF network element sends the first information related to the first PDU session and the second PDU session to the terminal device, the terminal device may determine by the terminal device that the first information indicates to bind the first PDU session and the second PDU session. Therefore, the first information may not include the indication information. Alternatively, the first information may include the indication information, so that the terminal device can conveniently determine, based on the indication information, to bind the first PDU session and the second PDU session.

Step S507: The SMF network element sends a session message to the UPF network element.

For the first PDU session and the second PDU session that are successfully bound, the SMF network element may select a same UPF network element for the first PDU session and the second PDU session based on the identifier of the bound first PDU session, the identifier of the bound second PDU session, and the like, or the SMF network element may select different UPF network elements for the first PDU session and the second PDU session. The SMF sends the session message to the UPF network element. The session message may include at least one of the following: a first N4 session identifier, a second N4 session identifier, information indicating to bind the first PDU session and the second PDU session, the first address of the first PDU session, and the second address of the second PDU session. The first address is the IP address corresponding to the first PDU session, and the second address is the IP address corresponding to the second PDU session.

An N4 session is a session between the SMF network element and the UPF network element, and the N4 session and the PDU session are in a one-to-one correspondence. For example, a first N4 session is corresponding to the first PDU session, and a second N4 session is corresponding to the second PDU session. An N4 session message is a message corresponding to the first request message. For example, when the first request message is the PDU session establishment request message, the N4 session message is an N4 session establishment message or an N4 session update message. When the first request message is the PDU session update request message, the N4 session message is an N4 session update message.

It should be noted that when the first PDU session or the second PDU session includes a plurality of IP addresses, one of the UE IP addresses needs to be indicated as a corresponding first address or a corresponding second address. When the first PDU session or the second PDU session includes only one IP address, the corresponding first address or the corresponding second address may be the foregoing unique IP address.

For example, if the SMF network element receives an IP address type corresponding to the first PDU session, the SMF network element may determine, based on the corresponding IP address type, an IP address corresponding to the first PDU session, for example, the UE IP 1. The SMF network element may further select a UE IP address corresponding to the second PDU session, for example, the UE IP 2. The SMF network element sends the N4 session message to the UPF network element. The N4 session message may include at least one of the following: the first N4 session identifier, the second N4 session identifier, the information indicating to bind the first PDU session and the second PDU session, the first address of the first PDU session, and the second address of the second PDU session.

Optionally, the SMF network element may further allocate a third address to the first PDU session and the second PDU session. The third address may also be referred to as an external UE IP address. The third address may be specifically a shared UE IP address allocated by the SMF network element or the UPF network element to the bound first PDU session and the bound second PDU session, and is used as a source address of the terminal device during interaction with a server. The third address may be the same as or different from the first address or the second address. For example, when the first address is the same as the second address, the first address or the second address is used as the third address. When the first address is different from the second address, the first address or the second address may be used as the third address, or a third address different from the first address and the second address is allocated. Correspondingly, the N4 session message may further include the third address and optionally, a third address indication. The third address indication indicates that the third address is used as a source address of the terminal device during interaction with an external server. When the third address is allocated by the UPF network element, the SMF network element sends a third address allocation indication, where the indication indicates the UPF network element to allocate the third address to the terminal device.

Optionally, the SMF network element may further send service flow description information and a multi-PDU transmission indication to the UPF network element. The service flow description information may be used to describe a basic status of a to-be-transmitted service flow. The multi-PDU transmission indication is used to enable the multi-PDU session distribution function on the UPF, or indicates that a related service flow may be bound to the two PDU sessions for transmission. For example, the multi-PDU transmission indication may be an MPTCP indication, an MPQUIC indication, a distribution indication, or the like. The multi-PDU session distribution function includes an MPTCP proxy function, an MP-QUIC function, a QUIC function, an ATSSS distribution function, a multi-connection distribution function, or the like. The multi-PDU session distribution function may implement splitting and convergence for a service flow transmitted in the first PDU session and the second PDU session.

Step S508: The UPF network element establishes a binding relationship between the first PDU session and the second PDU session.

In this embodiment of this application, the UPF network element can establish the binding relationship between the first PDU session and the second PDU session based on content in the session message. For example, when one PDU session of the first PDU session and the second PDU session corresponds to a plurality of UE IP addresses, if the UPF network element receives the first address of the first PDU session UE IP 1 or the second address of the second PDU session UE IP 2, the UPF network element may use the bound UE IP 1 or/and UE IP 2 as an address used during service flow splitting and convergence of the multi-PDU session distribution function. Specifically, for example, for the MPTCP proxy function, the UE IP 1 and/or the UE IP 2 are/is used as a UE IP address used between an MPTCP function on the UPF and an MPTCP function on the terminal device. When the first PDU session and the second PDU session each have only one UE IP address, the UPF uses respective UE IP addresses of the bound first PDU session and the bound second PDU session as UE IP addresses used by the multi-PDU session distribution function.

Optionally, the multi-PDU session distribution function in the UPF network element may allocate, to the bound first PDU session and the bound second PDU session, information such as an IP address or a port number corresponding to the multi-PDU session distribution function. The IP address of the multi-PDU session distribution function is an IP address of the UPF network element. When the UPF network element interacts with the terminal device, for an uplink service flow, the IP address is used as a destination IP to represent the IP address of the UPF network element, and for a downlink data flow, the IP address is used as a source IP address to represent the IP address of the UPF network element. Information about the IP address or the port number of the multi-PDU session distribution function is sent by the UPF network element to the SMF network element, and then is sent by the SMF network element to the terminal device through a NAS message. Alternatively, the information about the IP address or the port number of the multi-PDU session distribution function is sent by the UPF network element to the terminal device by using a user plane message.

Optionally, when the SMF network element has allocated the third address (namely, the external UE IP address) to the first PDU session and the second PDU session, the SMF network element may send the third address to the UPF network element. After receiving the third address, the UPF network element may store the third address, and the UPF network element does not need to allocate the external UE IP address to the first PDU session and the second PDU session. Alternatively, the UPF network element allocates the third address to the first PDU session and the second PDU session based on an indication of the SMF network element, and the UPF stores the third address.

Step S509: The terminal device and the UPF network element transmit data based on the bound first PDU session and the bound second PDU session.

In this embodiment of this application, the multi-PDU session distribution function may be supported between the terminal device and the UPF network element, and the multi-PDU session distribution function may be implemented according to an MPTCP protocol, an MPQUIC protocol, a QUIC protocol, or another protocol. The multi-PDU session distribution function may be shared by all bound single-access PDU sessions, to implement service flow splitting and convergence.

Optionally, during uplink data transmission, the terminal device may send a data packet of a first service flow by using the first PDU session and/or the second PDU session. A source address of the data packet of the first service flow includes the first address of the first PDU session and/or the second address of the second PDU session. Correspondingly, after receiving the data packet of the first service flow, the UPF network element may replace the source address of the data packet of the first service flow with the third address used for interacting with a server. When the third address is the same as the first address or the second address, the foregoing replacement processing does not need to be performed.

When the first service flow is split, a transparent distribution function or a non-transparent distribution function may be used. In the transparent distribution function, for uplink data, the UPF network element may read the source address of the data packet of the first service flow and an IP address of the target server. Therefore, after receiving the data packet of the first service flow in the transparent distribution function, the UPF network element may directly replace the source address of the data packet of the first service flow with the third address used for interacting with the server (or when the third address is the same as the first address or the second address, replacement is not required), and send the data packet to the target server by using the IP address of the target server. In the non-transparent distribution function, the UPF network element cannot read the IP address of the target server of the data packet of the first service flow. Therefore, for the non-transparent distribution function, the terminal device may send information such as the IP address and a port number of the target server to the UPF network element by using a message. For example, for a non-transparent MPTCP proxy mode, the UE sends the information such as the IP address and the port number of the target server to an MPTCP proxy function of the UPF network element by using a proxy message. In this way, for the uplink data, a source IP address processing manner is the same as that in the transparent mode. In addition, the UPF network element replaces the destination IP and/or port number with the IP address and/or port number of the target server. On the terminal device side, for the uplink data, when a data packet is transmitted in the first PDU session, the source address is the first address, or when the data packet is transmitted in the second PDU session, the source address is the second address. In the transparent mode or when the data packet is not processed by the multi-PDU session distribution function (for example, the IP address is not replaced or service flow convergence processing is not performed), the destination IP is the IP address of the target server. In a non-transparent mode or when the data packet is processed by the multi-PDU session distribution function (for example, the IP address is replaced or service flow convergence processing is performed), the destination IP is the IP address of the multi-PDU session distribution function. The service flow convergence processing includes: For example, the UPF network element reorders data packets of a same service flow that are transmitted in the first PDU session and the second PDU session.

For example, if the terminal device determines, based on the multi-PDU transmission indication, that a service flow A can be transmitted in two PDU sessions, for example, a multi-PDU distribution function indication and flow description information of the service flow A are sent to the terminal device, and the service flow B cannot be transmitted in two PDUs, that is, the service flow B can be transmitted only in one of the two PDUs. A data packet of the service flow A is split and transmitted in the bound first PDU session and the bound second PDU session. For example, transmission of the service flow A is switched from the first PDU session to the second PDU session, or is switched from the second PDU session transmission to the first PDU session transmission, or the service flow A is transmitted by using both the first PDU session and the second PDU session.

For the transparent distribution function, for example, a transparent MPTCP proxy function, when encapsulating the data packet of the service flow A, the terminal device may use the IP address of the target server as a destination IP address of the data packet, and use the bound IP address of the first PDU session and the second PDU session as a source IP address of the data packet, or use a special port number as a source port number (which is applicable to a scenario in which the service flows A and B need to be distinguished by a port number when the bound IP is also used by the service flow B). When encapsulating a data packet of the service flow B, the terminal device may use the IP address of the target server as a destination IP address, and use an IP address (which may be a bound UE IP address or a non-bound UE IP address) of a PDU session in which the service flow B can be transmitted and a port number different from that of the service flow A (which is applicable to a scenario in which the service flows A and B need to be distinguished by a port number when the bound UE IP address is used) as a source IP address and a source port number that are of the data packet. Correspondingly, after receiving a data packet sent by the terminal device, the UPF network element identifies the service flow A based on at least one of a source IP address or a source port number of the data packet, and sends the data packet of the service flow A to the foregoing distribution function for processing, for example, to the MPTCP proxy function for processing. Optionally, the MPTCP proxy function may replace a source UE IP address of the data packet with an external UE IP address, and then send the data packet to the server. The UPF network element may directly forward the data packet of the service flow B to the server.

For the non-transparent distribution function, for example, a non-transparent MPTCP proxy function, when encapsulating the data packet of the service flow A, the terminal device may use an MPTCP proxy IP address as a destination IP address of the data packet, and use the bound IP address of the first PDU session and the second PDU session as a source IP address of the data packet. When encapsulating the data packet of the service flow B, the terminal device may use the IP address of the target server as a destination IP address, and use an IP address of a PDU session in which the service flow B can be transmitted as a source IP address of the data packet. Correspondingly, after receiving a data packet sent by the terminal device, the UPF network element may identify, based on the MPTCP proxy IP address in the destination IP of the data packet, the service flow A that needs to be processed by the MPTCP proxy function, and send the data packet of the service flow A to the foregoing distribution function for processing, for example, to the MPTCP proxy function for processing. The MPTCP proxy function can replace a destination IP address of a data packet with an IP address of an external server. Optionally, a source IP address of the terminal device may be replaced with an external UE IP address. For a data packet whose destination IP address is not the MPTCP proxy IP address, for example, the data packet of the service flow B, the UPF network element may route the data packet to the target server based on the destination IP address of the data packet.

Optionally, during downlink data transmission, the multi-PDU session distribution function of the terminal device receives a data packet of a second service flow by using the first PDU session and/or the second PDU session. A destination address of the data packet of the second service flow includes the first address of the first PDU session and/or the second address of the second PDU session. A source IP address of the data packet of the second service flow is the IP address of the multi-PDU session distribution function or the IP address of the external server. After receiving the data packet of the second service flow, the terminal device may determine, based on the first address, the second address, or the source IP address of the multi-PDU session distribution function that are included in the data packet, that the data packet is processed by the multi-PDU session distribution function (for example, IP address replacement processing or service flow convergence processing is performed). It should be noted that the first service flow and the second service flow may be an uplink data flow and a downlink data flow for a same service, or for different service flows. This is not specifically limited in this embodiment of this application.

Optionally, the data packet of the second service flow may be obtained after the UPF network element performs processing (for example, IP address replacement processing or service flow distribution processing) on a data packet of a third service flow that is sent by the server. For example, the UPF network element receives a first data packet of the third service flow that is sent by the server. The first data packet of the third service flow includes an IP address (namely, the third address) of the terminal device, and a source address is the IP address of the external server. The UPF determines, based on the third address or the IP address of the external server, that the data packet is processed by the multi-PDU session distribution function. The multi-PDU session distribution function replaces the IP address of the terminal device in the data packet with the first address or the second address, to obtain a destination IP address of a second data packet of the third service flow (namely, the data packet of the second service flow). In addition, optionally, the source IP address of the data packet is replaced with a multi-PDU session function IP address to obtain a source IP address of the second data packet. The UPF network element sends the second data packet of the third service flow (namely, the data packet of the second service flow) to the terminal device by using the first PDU session and/or the second PDU session. For example, if the UPF network element encapsulates a data packet with the first address (that is, an IP address of the terminal device is replaced with the first address), the data packet is sent to the terminal device by using the first PDU session. If the UPF network element encapsulates the data packet by using the second address (that is, the IP address of the terminal device is replaced with the second address), the data packet is sent to the terminal device by using the second PDU session.

It may be understood that, in actual application, the terminal device and the UPF network element may alternatively transmit data in another manner in the bound first PDU session and the bound second PDU session. This is not specifically limited in this embodiment of this application.

Step S510: The terminal device sends a binding release request to the SMF network element, where the binding release request is used to request to release the binding between the first PDU session and the second PDU session.

In this embodiment of this application, the binding release request may include at least one of a binding release indication, the identifier of the first PDU session, and the identifier of the second PDU session. The binding release indication indicates that the binding relationship between the first PDU session and the second PDU session is released. After receiving the binding release request, the SMF network element may release the binding relationship between the first PDU session and the second PDU session.

Step S511: The SMF network element sends, to the UPF network element, an N4 message indicating to release the binding between the first PDU session and the second PDU session.

In this embodiment of this application, the N4 message may be an N4 update message or an N4 release message, and the N4 message may include at least one of the binding release indication, the first N4 session identifier corresponding to the first PDU session, and the second N4 session identifier corresponding to the second PDU session. After receiving the N4 message, the UPF network element may release the binding relationship between the first PDU session and the second PDU session.

It should be noted that a sequence of the steps in this embodiment of this application may be adjusted based on an actual application scenario, or the steps may be set as optional steps based on an actual application scenario. This is not specifically limited in this embodiment of this application.

In conclusion, in this embodiment of this application, binding between a plurality of PDU sessions is allowed to be established. When the plurality of PDU sessions are single-access PDU sessions, a multi-access PDU session function may be implemented by using a plurality of bound single-access PDUs. Therefore, when a multi-access PDU session is implemented, the multi-access PDU session may not be re-established, and a manner of implementing the multi-access PDU session is simpler. When a plurality of PDU sessions include a multi-access PDU session, a more flexible multi-PDU session can be implemented.

FIG. 6 is a signaling flowchart of another data transmission method not being part of the invention however helpful for understanding the invention according to an embodiment of this application. As shown in FIG. 6, the method provided in this embodiment includes the following steps.

Step S601: A terminal device registers with a 5GC network and establishes a PDU session.

Step S602: A PCF network element determines a multi-PDU session policy.

Step S603: The PCF network element sends the multi-PDU session policy to the terminal device.

Step S604: The terminal device sends a second request message to an SMF network element.

Step S605: The SMF network element determines that a first PDU session and a second PDU session can be bound.

Step S606: The SMF network element sends first information to the terminal device.

Step S607: The SMF network element sends a session message to a UPF network element.

Step S608: The UPF network element establishes a binding relationship between the first PDU session and the second PDU session.

Step S609: The terminal device and the UPF network element transmit data based on the bound first PDU session and the bound second PDU session.

Step S610: The SMF network element sends a binding release request to the terminal device, where the binding release request is used to request to release the binding between the first PDU session and the second PDU session.

Step S611: The SMF network element sends, to the UPF network element, an N4 message indicating to release the binding between the first PDU session and the second PDU session.

In this embodiment of this application, a network side initiates the binding of the first PDU session and the second PDU session. A difference from the embodiment corresponding to FIG. 5 is as follows.

In step S604, if the terminal device supports the multi-PDU session distribution function, the terminal device sends the second request message to the SMF network element, where the second request message includes the first indication information, and the first indication information indicates that the terminal device supports a multi-PDU session distribution capability. In other words, the terminal device no longer first determines a PDU session that needs to be bound in the embodiment corresponding to FIG. 5. It may be understood that the second request message may be sent by the terminal device when establishing a connection to the SMF network element, and the SMF network element may also store PDU session distribution capability information of the terminal device. In this case, when subsequently initiating multi-PDU session binding to the terminal device, the SMF network element may perform a corresponding operation based on the pre-stored PDU session distribution capability information of the terminal device. Alternatively, the second request message may be sent by the terminal device to the SMF network element in real time. For example, the second request is a session establishment request message or a session update request message. The second request message includes an identifier of the first PDU session. This is not specifically limited in this embodiment of this application.

Correspondingly, in step S605, a specific implementation of that the SMF network element determines that a first PDU session and a second PDU session can be bound may be: The SMF network element determines, based on a capability indication of the terminal device and a local policy, whether the first PDU session and another PDU session can be bound, and selects the second PDU session (or PDN connection) that can be bound to the first PDU session. For example, the second PDU session and the first PDU session have same characteristic information, and the characteristic information includes at least one of the following: a DNN of the PDU session, slice selection information, application identification information, flow description information, an SSC mode, a PDU session type, and the like.

In another optional implementation, the SMF network element selects, based on the capability indication of the terminal device and the local policy, the second PDU session that can be bound to the first PDU session. The SMF network element sends information about the first PDU session and/or information about the second PDU session to the PCF network element, and the PCF network element determines, according to a policy, whether binding of the two PDU sessions is allowed. For example, when the PCF network element determines that the first PDU session and the second PDU session have the same DNN, slice selection information, application identification information, flow description information, SSC mode, or PDU session type, the PCF network element determines that the first PDU session and the second PDU session are allowed to be bound. When the binding is allowed, the PCF network element sends at least one of a binding success indication or a distribution policy to the SMF network element, so that the SMF network element may determine, based on the binding success indication or the distribution policy, that the first PDU session and the second PDU session are allowed to be bound.

In another optional implementation, the SMF network element sends, to the PCF network element, the indication information indicating that the terminal device supports the multi-PDU session distribution capability and the information about the first PDU session. A specific implementation of that the PCF network element determines that a first PDU session and a second PDU session can be bound may be: The PCF network element determines, based on the capability indication of the terminal device and the local policy, whether the first PDU session can be bound to another PDU session, and then selects the second PDU session (or PDN connection) that can be bound to the first PDU session. For example, the second PDU session and the first PDU session have same characteristic information, and the characteristic information includes at least one of the following: a DNN of the PDU session, slice selection information, application identification information, flow description information, an SSC mode, a PDU session type, and the like. When the binding is allowed, the PCF network element sends at least one of a binding success indication or a distribution policy to the SMF network element, so that the SMF network element may determine, based on the binding success indication or the distribution policy, that the first PDU session and the second PDU session are allowed to be bound.

In addition, another difference from the embodiment corresponding to FIG. 5 is: In step S610, the binding release request is sent by the SMF network element to the terminal device.

Step S601 to step S603, step S606 to step S609, and step S611 are similar to step S501 to step S503, step S506 to step S509, and step S511 in the embodiment corresponding to FIG. 5. For details, refer to the foregoing descriptions, which are not described herein again.

It should be noted that a sequence of the steps in this embodiment of this application may be adjusted based on an actual application scenario, or the steps may be set as optional steps based on an actual application scenario. This is not specifically limited in this embodiment of this application.

In conclusion, in this embodiment of this application, binding between a plurality of PDU sessions is allowed to be established. When the plurality of PDU sessions are single-access PDU sessions, a multi-access PDU session function may be implemented by using a plurality of bound single-access PDUs. Therefore, when a multi-access PDU session is implemented, the multi-access PDU session may not be re-established, and a manner of implementing the multi-access PDU session is simpler. When a plurality of PDU sessions include a multi-access PDU session, a more flexible multi-access PDU session can be implemented.

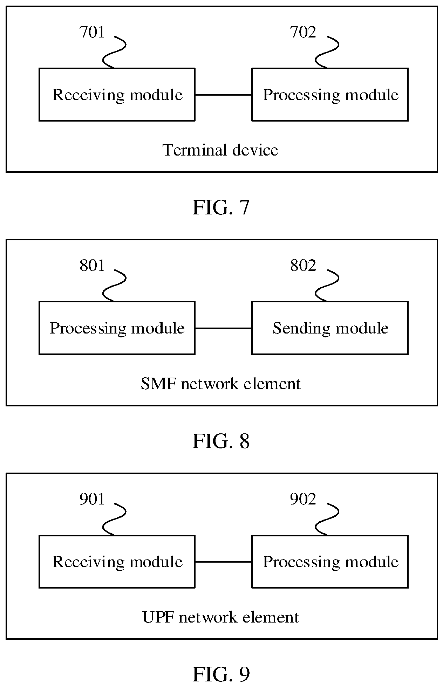

FIG. 7 is a schematic diagram of a structure of a communication apparatus according to the claimed invention. The communication apparatus is deployed on a terminal device. The apparatus in this embodiment of this application includes a receiving module 701 and a processing module 702. The receiving module 701 is configured to receive first information sent by a session management function SMF network element, where the first information indicates to bind a first packet data unit PDU session and a second PDU session. The processing module 702 is configured to transmit data based on the bound first PDU session and the bound second PDU session.

In a possible design, the first information includes at least one of an identifier of the first PDU session and an identifier of the second PDU session.

In a possible design, the first information further includes at least one of a first address of the first PDU session and type information of the first address, and/or at least one of a second address of the second PDU session and type information of the second address. The first address is an IP address corresponding to the first PDU session, and the second address is an IP address corresponding to the second PDU session.

In the claimed invention, the first information further includes indication information, indicating to bind the first PDU session and the second PDU session.

In a possible design, the apparatus further includes: a sending module, configured to send a first request message to the SMF network element, where the first request message includes the identifier of the first PDU session and information about the second PDU session, and the information about the second PDU session includes at least one of the identifier of the second PDU session, the second address of the second PDU session, and the type information of the second address, where
the receiving module is specifically configured to receive a response message that is sent by the SMF network element and that is of the first request message, where the response message of the first request message includes the first information.

In a possible design, the processing module is further configured to determine the information about the second PDU session according to a multi-PDU session policy, where the multi-PDU session policy indicates that a PDU session corresponding to the multi-PDU session policy has a binding capability.

In a possible design, the apparatus further includes: a sending module, configured to send a second request message to the SMF network element, where the second request message includes first indication information, and the first indication information indicates that the terminal device supports a multi-PDU session distribution capability; and the receiving module is further configured to receive a response message that is sent by the SMF network element and that is of the second request message, where the response message of the second request message includes the first information.

In a possible design, the processing module is specifically configured to: send a data packet of a first service flow by using the first PDU session and/or the second PDU session, where a source address of the data packet of the first service flow includes the first address of the first PDU session and/or the second address of the second PDU session; and/or
receive a data packet of a second service flow by using the first PDU session and/or the second PDU session, where a destination address of the data packet of the second service flow includes the first address of the first PDU session and/or the second address of the second PDU session.

In a possible design, the receiving module is further configured to receive the multi-PDU session policy sent by a policy control function PCF network element or locally configured.

In a possible design, the multi-PDU session policy is second indication information. The receiving module is specifically further configured to receive a first policy sent by the PCF network element, where the first policy includes the second indication information, and the second indication information indicates that a binding relationship is allowed to be established between PDU sessions established according to the first policy.

In a possible design, the receiving module is specifically further configured to receive a plurality of first policies sent by the PCF network element, where each first policy includes multi-PDU indication information, and a binding relationship is allowed to be established between PDU sessions that are established according to first policies including the same multi-PDU indication information.

In a possible design, the multi-PDU session policy includes a binding parameter, and the multi-PDU session policy indicates that a binding relationship is allowed to be established between PDU sessions including the same binding parameter.

In a possible design, the binding parameter includes at least one of the following information: a data network name DNN, slice selection information, application identification information, flow description information, a service and session continuity SSC mode, and a PDU session type.

In a possible design, the sending module is further configured to send a binding release request to the SMF network element, where the binding release request is used to request to release the binding between the first PDU session and the second PDU session.

FIG. 8 is a schematic diagram of a structure of an SMF network element according to an embodiment of this application. The SMF network element in this embodiment of this application includes a processing module 801 and a sending module 802. The processing module 801 is configured to determine that a first PDU session and a second PDU session can be bound. The sending module 802 is configured to send first information to a terminal device, where the first information indicates to bind the first PDU session and the second PDU session.

In a possible design, the sending module is further configured to send a session message to a user plane function UPF network element, where the session message includes at least one of the following: a first N4 session identifier, a second N4 session identifier, information indicating to bind the first PDU session and the second PDU session, a first address of the first PDU session, and a second address of the second PDU session. The first address is an IP address corresponding to the first PDU session, and the second address is an IP address corresponding to the second PDU session.

In a possible design, the processing module is specifically configured to: receive a first request message from the terminal device, where the first request message includes an identifier of the first PDU session and information about the second PDU session, and the information about the second PDU session includes at least one of an identifier of the second PDU session, the second address, and type information of the second address; and determine, based on a first condition, that the first PDU session and the second PDU can be bound; or receive a second request message from a terminal, where the second request message includes first indication information, and the first indication information indicates that the terminal supports a multi-PDU session distribution capability; and determine, based on a second condition, that the first PDU session and the second PDU session can be bound.

In a possible design, the first condition is: The first PDU session and the second PDU session have same characteristic information; or based on a PCF network element indication, the first PDU session and the second PDU session are allowed to be bound, where the characteristic information includes at least one of the following: a data network name DNN of a PDU session, slice selection information, application identification information, flow description information, a service and session continuity SSC mode, and a PDU session type. The second condition is: The first indication information indicates that the terminal device has a capability of binding the first PDU session and the second PDU session and that the first PDU session and the second PDU session can be bound; or the first indication information indicates that the terminal device has a capability of binding the first PDU session and the second PDU session, and the SMF network element receives information that is sent by the PCF network element and that indicates that the first PDU session and the second PDU session are allowed to be bound. For example, when the PCF network element determines that the first PDU session and the second PDU session have the same characteristic information, the PCF network element indicates the SMF network element to allow the first PDU session and the second PDU session to be bound. The characteristic information may include at least one of the following: the data network name DNN of the PDU session, the slice selection information, the application identification information, the flow description information, the SSC mode, and the PDU session type.

In a possible design, the first information includes at least one of the identifier of the first PDU session and the identifier of the second PDU session.

In a possible design, the first information further includes at least one of the first address of the first PDU session and type information of the first address, and/or at least one of the second address of the second PDU session and the type information of the second address. The first address is the IP address corresponding to the first PDU session, and the second address is the IP address corresponding to the second PDU session.

In a possible design, the first information further includes indication information, indicating to bind the first PDU session and the second PDU session.

FIG. 9 is a schematic diagram of a structure of a UPF network element according to an embodiment of this application. The UPF network element in this embodiment of this application includes a receiving module 901 and a processing module 902. The receiving module 901 is configured to receive a session message sent by an SMF session management function network element. The session message includes at least one of the following: a first N4 session identifier, a second N4 session identifier, information indicating to bind a first PDU session and a second PDU session, a first address of the first PDU session, and a second address of the second PDU session. The first address is an IP address corresponding to the first PDU session, and the second address is an IP address corresponding to the second PDU session. The processing module 902 is configured to transmit data with a terminal device based on the bound first PDU session and the bound second PDU session.

In a possible design, the processing module is specifically configured to: receive a data packet of a first service flow that is sent by the terminal device by using the first PDU session and/or the second PDU session, where a source address of the data packet of the first service flow includes the first address of the first PDU session and/or the second address of the second PDU session; and replace the source address in a first data packet with a third address, where the third address is used by the UPF network element to interact with a server.

In a possible design, the UPF network element further includes: the receiving module, configured to receive a first data packet of a third service flow sent by the server, where the first data packet of the third service flow includes an IP address of a terminal; and the processing module, configured to: replace the IP address of the terminal of the data packet based on the first address or the second address, to obtain a second data packet of the third service flow, and send the second data packet of the third service flow to the terminal device by using the first PDU session and/or the second PDU session.

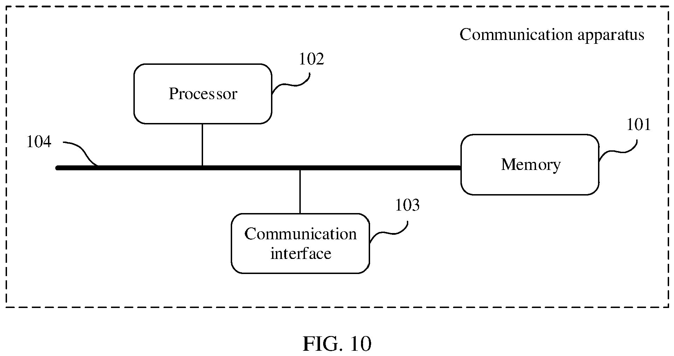

FIG. 10 is a schematic diagram of a hardware structure of a communication apparatus according to an embodiment of this application. Refer to FIG. 10. The communication apparatus 10 includes a memory 101, a processor 102, and a communication interface 103. The memory 101, the processor 102, and the communication interface 103 may communicate with each other. For example, the memory 101, the processor 102, and the communication interface 103 may communicate with each other through a communication bus 104. The memory 101 is configured to store a computer program, and the processor 102 executes the computer program to implement the method shown in the embodiment shown in FIG. 4, FIG. 5, or FIG. 6.

Optionally, the communication interface 103 may further include a transmitter and/or a receiver.

Optionally, the processor may be a central processing unit (central processing unit, CPU), or may be another general-purpose processor, a digital signal processor (digital signal processor, DSP), an application-specific integrated circuit (application-specific integrated circuit, ASIC), or the like. The general-purpose processor may be a microprocessor, or the processor may be any conventional processor, or the like. The steps of the methods disclosed with reference to embodiments of this application may be directly performed by a hardware processor, or may be performed by using a combination of hardware in the processor and a software module.

An embodiment of this application provides a computer-readable storage medium. The computer-readable storage medium is configured to store a computer program, and the computer program is configured to implement the method shown in the embodiment shown in FIG. 4, FIG. 5, or FIG. 6.

An embodiment of this application further provides a communication system, including the communication apparatus shown in FIG. 7, the SMF network element shown in FIG. 8, and the UPF network element shown in FIG. 9.

An embodiment of this application further provides a system chip. The system chip is configured to support a communication apparatus to implement the functions shown in embodiments of this application (for example, receiving, by a terminal device, first information sent by a session management function SMF network element, where the first information indicates to bind a first packet data unit PDU session and a second PDU session; and performing, by the terminal device, data transmission based on the bound first PDU session and the bound second PDU session). The chip is specifically used in a chip system. The chip system may include a chip, or may include a chip and another discrete device. When the foregoing methods are implemented by using a chip in a first device, the chip includes a processing unit. Further, the chip may further include a communication unit. The processing unit may be, for example, a processor. When the chip includes the communication unit, the communication unit may be, for example, an input/output interface, a pin, or a circuit. The processing unit performs all or some actions performed by processing modules in embodiments of this application, and the communication unit may perform a corresponding receiving or sending action, for example, the communication unit may receive configuration signaling sent by a network device. In another specific embodiment, a processing module of a receiving device in this embodiment of this application may be the processing unit of the chip, and the receiving module or a sending module of a control device is the communication unit of the chip.

Embodiments of this application are described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processing unit of another programmable data processing device to generate a machine, so that instructions executed by the computer or the processing unit of the another programmable data processing device generate an apparatus for implementing a specific function in one or more processes in the flowcharts and/or in one or more blocks in the block diagrams.

These computer program instructions are stored in a computer-readable memory indicating a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

It should be noted that the network elements in embodiments of this application may also use other definitions or names in specific application. For example, the SMF network element may be referred to as a first core network element, the UPF network element may be referred to as a second core network element, the PCF network element may be referred to as a third core network element, the AMF network element may be referred to as a fourth core network element. Alternatively, the foregoing network elements may also be collectively referred to as core network elements. Alternatively, other names may be defined for the foregoing network elements based on actual functions. This is not specifically limited in embodiments of this application.

## Claims

1. A data transmission method, comprising:
receiving (S401), by a terminal device, first information from a session management function, SMF, network element, wherein the first information indicates to bind a first packet data unit, PDU, session and a second PDU session; and
transmitting (S402), by the terminal device, data based on the bound first PDU session and the bound second PDU session;
wherein the method further comprises:
sending (S504), by the terminal device, a first request message to the SMF network element, wherein the first request message comprises an identifier of the first PDU session and information about the second PDU session, and the information about the second PDU session comprises at least one of an identifier of the second PDU session, the second address of the second PDU session, and the type information of the second address; and
the receiving, by the terminal device, the first information from the SMF network element comprises:
receiving (S506), by the terminal device, a response message of the first request message from the SMF network element, wherein the response message of the first request message comprises the first information.

2. The method according to claim 1, wherein the first information comprises at least one of an identifier of the first PDU session and an identifier of the second PDU session.

3. The method according to claim 1 or 2, wherein the first information further comprises at least one of a first address of the first PDU session and type information of the first address, and/or at least one of a second address of the second PDU session and type information of the second address; and the first address is an IP address corresponding to the first PDU session, and the second address is an IP address corresponding to the second PDU session.

4. The method according to claim 1, further comprising:
determining, by the terminal device, the information about the second PDU session according to a multi-PDU session policy, wherein the multi-PDU session policy indicates that a PDU session corresponding to the multi-PDU session policy has a binding capability.

5. The method according to any one of claims 1 to 3, further comprising:
sending (S604), by the terminal device, a second request message to the SMF network element, wherein the second request message comprises first indication information, and the first indication information indicates that the terminal device supports a multi-PDU session distribution capability; and
the receiving, by the terminal device, the first information from the SMF network element comprises:
receiving (S606), by the terminal device, a response message of the second request message from the SMF network element, wherein the response message of the second request message comprises the first information.

6. The method according to any one of claims 1 to 5, wherein the performing, by the terminal device, data transmission based on the bound first PDU session and the bound second PDU session comprises:
sending, by the terminal device, a data packet of a first service flow by using the first PDU session and/or the second PDU session, wherein a source address of the data packet of the first service flow comprises the first address of the first PDU session and/or the second address of the second PDU session; and/or
receiving, by the terminal device, a data packet of a second service flow by using the first PDU session and/or the second PDU session, wherein a destination address of the data packet of the second service flow comprises the first address of the first PDU session and/or the second address of the second PDU session.

7. The method according to claim 4, further comprising:
receiving, by the terminal device, the multi-PDU session policy from a policy control function, PCF, network element.

8. The method according to claim 7, wherein the multi-PDU session policy is second indication information, and the receiving, by the terminal device, the multi-PDU session policy from a PCF network element comprises:
receiving, by the terminal device, a first policy from the PCF network element, wherein the first policy comprises the second indication information, and the second indication information indicates that a binding relationship is allowed to be established between PDU sessions established according to the first policy.

9. The method according to claim 7, wherein the receiving, by the terminal device, the multi-PDU session policy from the PCF network element comprises:
receiving, by the terminal device, a plurality of first policies from the PCF network element, wherein each first policy comprises multi-PDU indication information, and a binding relationship is allowed to be established between PDU sessions that are established according to first policies comprising the same multi-PDU indication information.

10. The method according to claim 7, wherein the multi-PDU session policy comprises a binding parameter, and the multi-PDU session policy indicates that a binding relationship is allowed to be established between PDU sessions comprising the same binding parameter.

11. The method according to claim 10, wherein the binding parameter comprises at least one of the following information: a data network name, DNN, slice selection information, application identification information, flow description information, a service and session continuity, SSC, mode, and a PDU session type.

12. A communication apparatus, comprising a processor and an interface circuit, wherein the interface circuit is configured to receive code instructions and transmit the code instructions to the processor, and the processor is configured to run the code instructions to perform the method according to any one of claims 1 to 11.

13. A computer-readable storage medium, wherein the computer-readable storage medium is configured to store a computer program, and the computer program is configured to implement the method according to any one of claims 1 to 11.

## Patentansprüche

1. Datenübertragungsverfahren, umfassend:
Empfangen (S401) erster Informationen durch eine Endgerätevorrichtung von einem Netzwerkelement mit Sitzungsverwaltungsfunktion, SMF, wobei die ersten Informationen anzeigen, dass eine erste Paketdateneinheits-, PDU-, Sitzung und eine zweite PDU-Sitzung gebunden werden sollen; und
Übertragen (S402) von Daten durch die Endgerätevorrichtung basierend auf der gebundenen ersten PDU-Sitzung und der gebundenen zweiten PDU-Sitzung,
wobei das Verfahren ferner Folgendes umfasst:
Senden (S504) einer ersten Anforderungsnachricht durch die Endgerätevorrichtung an das SMF-Netzwerkelement, wobei die erste Anforderungsnachricht eine Kennung der ersten PDU-Sitzung und Informationen über die zweite PDU-Sitzung umfasst und die Informationen über die zweite PDU-Sitzung mindestens eine von einer Kennung der zweiten PDU-Sitzung, der zweiten Adresse der zweiten PDU-Sitzung und den Typinformationen der zweiten Adresse umfassen; und
wobei das Empfangen der ersten Informationen durch die Endgerätevorrichtung vom SMF-Netzwerkelement Folgendes umfasst:
Empfangen (S506) einer Antwortnachricht vom SMF-Netzwerkelement durch die Endgerätevorrichtung auf die erste Anforderungsnachricht, wobei die Antwortnachricht auf die erste Anforderungsnachricht die ersten Informationen umfasst.

2. Verfahren nach Anspruch 1, wobei die ersten Informationen mindestens eine von einer Kennung der ersten PDU-Sitzung und einer Kennung der zweiten PDU-Sitzung umfassen.

3. Verfahren nach Anspruch 1 oder 2, wobei die ersten Informationen ferner mindestens eine von einer ersten Adresse der ersten PDU-Sitzung und Typinformationen der ersten Adresse und/oder mindestens eine von einer zweiten Adresse der zweiten PDU-Sitzung und Typinformationen der zweiten Adresse umfassen; und die erste Adresse eine IP-Adresse ist, die der ersten PDU-Sitzung entspricht, und die zweite Adresse eine IP-Adresse ist, die der zweiten PDU-Sitzung entspricht.

4. Verfahren nach Anspruch 1, ferner Folgendes umfassend:
Bestimmen der Informationen über die zweite PDU-Sitzung durch die Endgerätevorrichtung gemäß einer Multi-PDU-Sitzungsrichtlinie, wobei die Multi-PDU-Sitzungsrichtlinie anzeigt, dass eine PDU-Sitzung, die der Multi-PDU-Sitzungsrichtlinie entspricht, eine Bindungsfähigkeit aufweist.

5. Verfahren nach einem der Ansprüche 1 bis 3, ferner Folgendes umfassend:
Senden (S604) einer zweiten Anforderungsnachricht durch die Endgerätevorrichtung an das SMF-Netzwerkelement, wobei die zweite Anforderungsnachricht erste Anzeigeinformationen umfasst und die ersten Anzeigeinformationen anzeigen, dass die Endgerätevorrichtung Multi-PDU-Sitzungsverteilungsfähigkeit unterstützt; und
wobei das Empfangen der ersten Informationen durch die Endgerätevorrichtung vom SMF-Netzwerkelement Folgendes umfasst:
Empfangen (S606) einer Antwortnachricht vom SMF-Netzwerkelement durch die Endgerätevorrichtung auf die zweite Anforderungsnachricht, wobei die Antwortnachricht auf die zweite Anforderungsnachricht die ersten Informationen umfasst.

6. Verfahren nach einem der Ansprüche 1 bis 5, wobei das Durchführen von Datenübertragung durch die Endgerätevorrichtung basierend auf der gebundenen ersten PDU-Sitzung und der gebundenen zweiten PDU-Sitzung Folgendes umfasst:
Senden eines Datenpakets eines ersten Dienstflusses durch die Endgerätevorrichtung durch Verwenden der ersten PDU-Sitzung und/oder der zweiten PDU-Sitzung, wobei eine Quelladresse des Datenpakets des ersten Dienstflusses die erste Adresse der ersten PDU-Sitzung und/oder die zweite Adresse der zweiten PDU-Sitzung umfasst; und/oder
Empfangen eines Datenpakets eines zweiten Dienstflusses durch die Endgerätevorrichtung durch Verwenden der ersten PDU-Sitzung und/oder der zweiten PDU-Sitzung, wobei eine Zieladresse des Datenpakets des zweiten Dienstflusses die erste Adresse der ersten PDU-Sitzung und/oder die zweite Adresse der zweiten PDU-Sitzung umfasst.

7. Verfahren nach Anspruch 4, ferner Folgendes umfassend:
Empfangen der Multi-PDU-Sitzungsrichtlinie durch die Endgerätevorrichtung von einem Netzwerkelement mit Richtlinienkontrollfunktion, PCF.

8. Verfahren nach Anspruch 7, wobei es sich bei der Multi-PDU-Sitzungsrichtlinie um zweite Anzeigeinformationen handelt und das Empfangen der Multi-PDU-Sitzungsrichtlinie durch die Endgerätevorrichtung von einem PCF-Netzwerkelement Folgendes umfasst:
Empfangen einer ersten Richtlinie durch die Endgerätevorrichtung vom PCF-Netzwerkelement, wobei die erste Richtlinie die zweiten Anzeigeinformationen umfasst und die zweiten Anzeigeinformationen anzeigen, das eine Bindungsbeziehung zwischen PDU-Sitzungen aufgebaut werden darf, die gemäß der ersten Richtlinie aufgebaut sind.

9. Verfahren nach Anspruch 7, wobei das Empfangen der Multi-PDU-Sitzungsrichtlinie durch die Endgerätevorrichtung vom PCF-Netzwerkelement Folgendes umfasst:
Empfangen einer Mehrzahl von ersten Richtlinien durch die Endgerätevorrichtung vom PCF-Netzwerkelement, wobei jede erste Richtlinie Multi-PDU-Anzeigeinformationen umfasst und eine Bindungsbeziehung zwischen PDU-Sitzungen aufgebaut werden darf, die gemäß ersten Richtlinien aufgebaut sind, die dieselben Multi-PDU-Anzeigeinformationen umfassen.

10. Verfahren nach Anspruch 7, wobei die Multi-PDU-Sitzungsrichtlinie einen Bindungsparameter umfasst und die Multi-PDU-Sitzungsrichtline anzeigt, dass eine Bindungsbeziehung zwischen PDU-Sitzungen aufgebaut werden darf, die denselben Bindungsparameter umfassen.

11. Verfahren nach Anspruch 10, wobei der Bindungsparameter mindestens eine der folgenden Informationen umfasst: einen Datennetzwerknamen, DNN, "Slice"-Auswahlinformationen, Anwendungsidentifikationsinformationen, Flussbeschreibungsinformationen, einen Dienst- und Sitzungskontinuitäts-, SSC-, Modus und einen PDU-Sitzungstyp.

12. Kommunikationsvorrichtung, umfassend einen Prozessor und eine Schnittstellenschaltung, wobei die Schnittstellungschaltung zum Empfangen von Codeanweisungen und Senden der Codeanweisungen an den Prozessor konfiguriert ist und der Prozessor zum Ausführen der Codeinformationen zur Durchführung des Verfahrens einem der Ansprüche 1 bis 11 konfiguriert ist.

13. Computerlesbares Speichermedium, wobei das computerlesbare Speichermedium zum Speichern eines Computerprogramms konfiguriert ist und das Computerprogramm zum Implementieren des Verfahrens nach einem der Ansprüche 1 bis 11 konfiguriert ist.

## Revendications

1. Procédé de transmission de données, comprenant :
la réception (S401), par un dispositif terminal, de premières informations à partir d'un élément de réseau à fonction de gestion de session, SMF, dans lequel les premières informations indiquent de lier une première session d'unité de données par paquets, PDU, et une deuxième session de PDU ; et
la transmission (S402), par le dispositif terminal, de données basées sur la première session de PDU et la deuxième session de PDU liées ;
le procédé comprenant en outre :
l'envoi (S504), par le dispositif terminal, d'un premier message de demande à l'élément de réseau SMF, dans lequel le premier message de demande comprend un identifiant de la première session de PDU et des informations relatives à la deuxième session de PDU, et les informations relatives à la deuxième session de PDU comprennent au moins un identifiant de la deuxième session de PDU, la deuxième adresse de la deuxième session de PDU, et/ou les informations de type de la deuxième adresse ; et la réception, par le dispositif terminal, des premières informations à partir de l'élément de réseau SMF comprend :
la réception (S506), par le dispositif terminal, d'un message de réponse au premier message de demande à partir de l'élément de réseau SMF, dans lequel le message de réponse au premier message de demande comprend les premières informations.

2. Procédé selon la revendication 1, dans lequel les premières informations comprennent au moins un identifiant de la première session de PDU et un identifiant de la deuxième session de PDU.

3. Procédé selon la revendication 1 ou 2, dans lequel les premières informations comprennent en outre au moins une première adresse de la première session de PDU et des informations de type de la première adresse, et/ou au moins une deuxième adresse de la deuxième session de PDU et des informations de type de la deuxième adresse ; et la première adresse est une adresse IP correspondant à la première session de PDU, et la deuxième adresse est une adresse IP correspondant à la deuxième session de PDU.

4. Procédé selon la revendication 1, comprenant en outre :
la détermination, par le dispositif terminal, des informations relatives à la deuxième session de PDU conformément à une stratégie de multi-sessions de PDU, dans lequel la stratégie de multi-sessions de PDU indique qu'une session de PDU correspondant à la stratégie de multi-sessions de PDU dispose d'une capacité de liaison.

5. Procédé selon l'une quelconque des revendications 1 à 3, comprenant en outre :
l'envoi (S604), par le dispositif terminal, d'un deuxième message de demande à l'élément de réseau SMF, dans lequel le deuxième message de demande comprend des premières informations d'indication, et les premières informations d'indication indiquent que le dispositif terminal prend en charge une capacité de distribution de multi-sessions de PDU ; et
la réception, par le dispositif terminal, des premières informations à partir de l'élément de réseau SMF comprend :
la réception (S606), par le dispositif terminal, d'un message de réponse au deuxième message de demande à partir de l'élément de réseau SMF, dans lequel le message de réponse au deuxième message de demande comprend les premières informations.

6. Procédé selon l'une quelconque des revendications 1 à 5, dans lequel la réalisation, par le dispositif terminal, d'une transmission de données en fonction de la première session de PDU liée et de la deuxième session de PDU liée comprend :
l'envoi, par le dispositif terminal, d'un paquet de données d'un premier flux de service à l'aide de la première session de PDU et/ou de la deuxième session de PDU, dans lequel une adresse source du paquet de données du premier flux de service comprend la première adresse de la première session de PDU et/ou la deuxième adresse de la deuxième session de PDU ; et/ou
la réception, par le dispositif terminal, d'un paquet de données d'un deuxième flux de service à l'aide de la première session de PDU et/ou de la deuxième session de PDU, dans lequel une adresse de destination du paquet de données du deuxième flux de service comprend la première adresse de la première session de PDU et/ou la deuxième adresse de la deuxième session de PDU.

7. Procédé selon la revendication 4, comprenant en outre :
la réception, par le dispositif terminal, de la stratégie de multi-sessions de PDU à partir d'un élément de réseau à fonction de commande de stratégie, PCF.

8. Procédé selon la revendication 7, dans lequel la stratégie de multi-sessions de PDU est constituée de deuxièmes informations d'indication, et la réception, par le dispositif terminal, de la stratégie de multi-sessions de PDU à partir d'un élément de réseau PCF comprend :
la réception, par le dispositif terminal, d'une première stratégie à partir de l'élément de réseau PCF, dans lequel la première stratégie comprend les deuxièmes informations d'indication, et les deuxièmes informations d'indication indiquent que l'établissement d"une relation de liaison est autorisé entre des sessions de PDU établies conformément à la première stratégie.

9. Procédé selon la revendication 7, dans lequel la réception, par le dispositif terminal, de la stratégie de multi-sessions de PDU à partir de l'élément de réseau PCF comprend :
la réception, par le dispositif terminal, d'une pluralité de premières stratégies à partir de l'élément de réseau PCF, dans lequel chaque première stratégie comprend des informations d'indication de multi-PDU, et l'établissement d'une relation de liaison est autorisée entre des sessions de PDU qui sont établies conformément à des premières stratégies comprenant les mêmes informations d'indication de multi-PDU.

10. Procédé selon la revendication 7, dans lequel la stratégie de multi-sessions de PDU comprend un paramètre de liaison, et la stratégie de multi-sessions de PDU indique que l'établissement d'une relation de liaison est autorisé entre des sessions de PDU comprenant le même paramètre de liaison.

11. Procédé selon la revendication 10, dans lequel le paramètre de liaison comprend au moins une des informations suivantes : nom de réseau de données, DNN, informations de sélection de tranche, informations d'identification d'application, informations de description de flux, mode de continuité de service et de session, SSC, mode et type de session de PDU.

12. Appareil de communication, comprenant un processeur et un circuit d'interface, dans lequel le circuit d'interface est configuré pour recevoir des instructions de code et transmettre les instructions de code au processeur, et le processeur est configuré pour exécuter les instructions de code afin de réaliser le procédé selon l'une quelconque des revendications 1 à 11.

13. Support de stockage lisible par ordinateur, le support de stockage lisible par ordinateur étant configuré pour stocker un programme informatique, et le programme informatique étant configuré pour mettre en oeuvre le procédé selon l'une quelconque des revendications 1 à 11.
